(19) Europäisches Patentamt
European Patent Office
Office européen des brevets

(11) Veröffentlichungsnummer: **0 278 913**
**A2**

(12) # EUROPÄISCHE PATENTANMELDUNG

(21) Anmeldenummer: **88810073.2**

(22) Anmeldetag: **08.02.88**

(51) Int. Cl.[4]: **C 09 B 67/22**
C 09 B 57/04, C 09 B 57/06,
C 08 K 5/42

(30) Priorität: **12.02.87 CH 521/87**

(43) Veröffentlichungstag der Anmeldung:
**17.08.88 Patentblatt 88/33**

(84) Benannte Vertragsstaaten: **DE FR GB IT**

(71) Anmelder: **CIBA-GEIGY AG**
**Klybeckstrasse 141**
**CH-4002 Basel (CH)**

(72) Erfinder: **Lienhard, Paul, Dr.**
**Kirschgartenstrasse 14**
**CH-4402 Frenkendorf (CH)**

**Tanner, Martin, Dr.**
**Uf em Berg**
**CH-1711 Tentlingen (CH)**

**Bugnon, Philippe, Dr.**
**La Chenalyete**
**CH-1724 Essert (CH)**

(54) **Neue Stoffzusammensetzungen auf der Basis von Metallkomplexpigmenten sowie neue Verbindungen.**

(57) Stoffzusammensetzung enthaltend a) ein gelbes, oranges, rotes, braunes oder violettes Metallkomplexpigment und b) ein anionisches oder kationisches Derivat eines solchen Metallkomplexpigmentes, wobei das Mengenverhältnis der Komponente a) zur Komponente b) 99 bis 80 Gew.% zu 1 bis 20 Gew.% beträgt.

Derartige Stoffzusammensetzungen sind zum Einfärben von hochmolekularem organischem Material geeignet und zeichnen sich insbesonders in Lacken durch ein gutes rheologisches Verhalten aus.

Neue Metallkomplexpigmente gemäss Komponente b) werden auch beschrieben.

EP 0 278 913 A2

**Beschreibung**

Neue Stoffzusammensetzungen auf der Basis von Metallkomplexpigmenten sowie neue Verbindungen

Die Erfindung betrifft Stoffzusammensetzungen enthaltend ein gelbes, oranges, rotes, braunes oder violettes Metallkomplexpigment und ein anionisches oder kationisches Derivat davon, sowie ihre Verwendung zum Färben von hochmolekularem organischem Material.

Die Verwendung von gelben bis violetten Metallkomplexen zum Färben von hochmolekularem organischem Material ist schon lange bekannt (vgl. z.B. DE-OS 2 025 078, EP Patentanmeldungen Nr. 88729 und Nr. 98242), sie erfüllen jedoch insbesonders bezüglich ihres rheologischen Verhaltens in der Applikation nicht immer die ständig wachsenden Erfordernisse der Praxis. Für Zweischichtlackierungen beispielsweise werden aus wirtschaftlichen und oekotoxikologischen Gründen vermehrt Lacke mit reduziertem Lösungsmittelanteil bzw. hohem Pigmentgehalt ("high solids") eingesetzt, was bei vielen der dort eingesetzten Pigmente zu Rheologieproblemen in der Applikation führt. Ausserdem können sich dabei die Nuance, Transparenz, Reinheit und der Glanz der daraus resultierenden Ausfärbungen stark verändern.

Es wurde nun gefunden, dass durch Oberflächenbehandlung von gelben bis violetten Metallkomplexpigmenten mit einem salzartigen Derivat davon besonders die rheologischen Eigenschaften des Metallkomplexpigmentes überraschenderweise verbessert werden können.

Die vorliegende Erfindung betrifft demnach eine Stoffzusammensetzung enthaltend a) ein gelbes, oranges, rotes, braunes oder violettes Metallkomplexpigment und b) ein anionisches oder kationisches Derivat eines solchen Metallkomplexpigments, wobei das Mengenverhältnis der Komponente a) zur Komponente b) 99 bis 80 Gew.% zu 1 bis 20 Gew.% beträgt.

Erfindungsgemässe in Frage kommende Metallkomplexpigmente sind beispielsweise Metallkomplexe der Azo-, Azomethin-, Oxim-, Aroylhydrazon-, Isoindolin- oder Isoindolinonreihe.

Beispiele von Azometallkomplexpigmenten sind Metallkomplexe aus Liganden enthaltend o,o′-Dihydroxyazo- oder o-Hydroxy-o′-carboxyazo-Gruppierungen, wie beispielsweise in der europäischen Patentanmeldung Nr. 183651 beschrieben, ferner Metallkomplexpigmente aus Liganden enthaltend mindestens einen Arylazorest, der nicht an der Komplexbildung beteiligt ist, wie beispielsweise die Umsetzungsprodukte von Arylazosalicylaldehyden mit Hydroxylamin (vgl. diesbezüglich EP Patentanmeldung Nr. 169167), mit Aroylhydraziden oder Semicarbaziden.

Azomethine leiten sich beispielsweise von Monoazomethinen, wie o,o′-Dihydroxyazomethinen (vgl. DE-OS 2 025 078, DE-OS 2 025 143 oder DE-OS 2 025 111), oder von Monoazomethinen aus isocyclischen oder heterocyclischen o-Hydroxycarbonylverbindungen und isocyclischen oder heterocyclischen o-Hydroxyaminen, oder Arylen-1,2-bisazomethinen (vgl. DE-PS 2 308 594, DE-OS 2 330 553, DE-OS 2 533 674, DE-PS 2 533 676 und DE-OS 2 728 864), ab.

Beispiele für Oxime sind Metallkomplexe aus 1,2-Hydroxyaryl-aldoxim-oder -ketoxim-Liganden (vgl. EP-Patentanmeldung Nr. 169167), α-Oximido-N-Heterocyclen oder α-β-Diketodioximliganden.

Beispiele für Aroylhydrazonderivate sind Aroylhydrazonliganden aus o-Hydroxycarbonylverbindungen und aromatischen Carbonsäurehydraziden (vgl. EP Patentanmeldung Nr. 88729), oder Aroylhydrazono-N-Heterocyclus-Derivate (vgl. EP Patentanmeldung Nr. 98242).

Isoindolinmetallkomplexpigmente können Methin- oder Iminoisoindolinderivate sein, beispielsweise Methin- oder Iminoisoindolin-azine. Beispiele für Isoindolinone sind Methin- oder Iminoisoindolinone sowie Isoindolinonazine.

Beim anionischen Derivat (Komponente b der Stoffzusammensetzung) kann es sich beispielsweise um anionische Sulfonsäurederivate, die mindestens eine Gruppe der Formel

$-SO_3^{\ominus} X^{\oplus}$

aufweisen, handeln, worin $X^{\oplus}$ eine Gruppe der Formeln $\frac{M^{n\oplus}}{n}$, oder $N^{\oplus}(R_1)(R_2)(R_3)(R_4)$ darstellt, wobei $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, Benzyl, unsubstituiertes oder durch $C_1$-$C_{18}$-Alkyl substituiertes Phenyl bedeuten, oder $R_3$ und $R_4$ zusammen mit dem N-Atom einen Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chinolin- oder Isochinolinrest bilden.

$X^{\oplus}$ ist vorzugsweise eine Gruppe der Formel $\frac{M^{n\oplus}}{n}$.

Stellt $X^{\oplus}$ eine Gruppe der Formel $\frac{M^{n\oplus}}{n}$ dar, so handelt es sich bei $M^{n\oplus}$ beispielsweise um ein Alkali-, Erdalkali-, Aluminium- oder Uebergangsmetallkation, wie z.B. $Na^{\oplus}$, $K^{\oplus}$, $Mg^{2\oplus}$, $Ca^{2\oplus}$, $Sr^{2\oplus}$, $Ba^{2\oplus}$, $Mn^{2\oplus}$, $Cu^{2\oplus}$, $Ni^{2\oplus}$, $Cd^{2\oplus}$ und $Al^{3\oplus}$, insbesondere aber um ein Alkali- oder Erdalkalimetallkation (n = 1 oder 2) und bevorzugt um $Ca^{2\oplus}$.

Das anionische oder kationische Derivat (Komponente b) kann in der Stoffzusammensetzung sowohl den gleichen als auch einen verschiedenen Strukturtypus wie denjenigen der Komponente a) aufweisen. Zweckmässig aber weisen die Komponenten a) und b) den gleichen Strukturtypus auf.

Bedeuten etwaige Substituenten $C_1$-$C_{18}$-Alkyl, so handelt es sich dabei z.B. um Methyl, Ethyl, n-Propyl, Isopropyl, n-Butyl, sec.-Butyl, tert.-Butyl, n-Pentyl, tert.-Pentyl, Hexyl, Heptyl, Octyl, Decyl, Dodecyl, Tetradecyl, Hexadecyl, Heptadecyl oder Octadecyl.

Bedeuten $R_1$, $R_2$, $R_3$ und $R_4$ $C_5$-$C_6$-Cycloalkyl, dann handelt es sich z.B. um Cyclopentyl oder insbesondere um Cyclohexyl.

Als durch $C_1$-$C_{18}$-Alkyl substituiertes Phenyl, bedeuten $R_1$, $R_2$, $R_3$ und $R_4$ vorzugsweise durch $C_{12}$-$C_{18}$-Alkyl substituiertes Phenyl.

Als Beispiele für $N^{\oplus}(R_1)(R_2)(R_3)(R_4)$ seien genannt: $N^{\oplus}H_4$, $N^{\oplus}H_3(CH_3)$, $N^{\oplus}H_2(CH_3)_2$, $N^{\oplus}H_3(C_2H_5)$, $N^{\oplus}H_2(C_2H_5)_2$, $N^{\oplus}H_3(C_3H_7$-iso), $N^{\oplus}H_3$(Cyclohexyl), $N^{\oplus}H_2$(Cyclohexyl)$_2$, $N^{\oplus}H_2(CH_3)(C_6H_5)$, $N^{\oplus}H_3(C_6H_5)$,$N^{\oplus}H_3$(p-Octadecylphenyl) und $N^{\oplus}(CH_3)_4$.

Weitere erfindungsgemäss in Frage kommende anionische Derivate sind beispielsweise 1:2-Cr(III)- oder -Co(III)-Komplexe von o,o′-Dihydroxyazo- oder o-Carboxy-o′-hydroxy-azo- oder -azomethin-Verbindungen, bei denen das Metallion bei der Komplexbildung vier Protonen der Ligandmoleküle ersetzt. Zur Verbesserung ihrer Wasserlöslichkeit während ihrer Herstellung und des Mischens mit der Komponente a) können solche Verbindungen Sulfonamid-, N-Mono- oder N,N-Dialkylsulfonamidgruppen, wie β-Hydroxyethyl- oder Dimethyl sufonamidgruppen, Alkylsulfongruppen, wie Methyl- oder Ethylsulfongruppen, oder Sulfogruppen enthalten. Derartige anionische Derivate liegen in der erfindungsgemässen Stoffzusammensetzung in Form von Metall- oder Aminsalzen vor, wie sie oben bei der Definition des Restes $X^{\oplus}$ ausgedeutet sind.

Ist die Komponente b) eine kationische Verbindung, so kann es sich um das Umsetzungsprodukt einer kationischen Vorstufe handeln, wie z.B. durch Trialkylammoniumgruppen substituierte Salicylaldehyde, welche durch Umsetzung mit einem geeigneten Amin in kationische Azomethin-Metallkomplexe übergeführt werden können; es kann sich auch um Verbindungen handeln, die vom Komplexaufbau der kationisch sind, indem das Uebergangsmetallion in den Ligandmolekülen eine kleinere Anzahl Protonen freisetzt, als seiner Ladung entspricht. Beispiels hierfür sind die 1:1-$M^{2\oplus}$ Metallkomplexe von 2-Pyridylazo-oder 8-Chinolyl-azo- oder -azomethin-2′-hydroxy- oder -2′-carboxyarylverbindungen. Solche Derivate liegen in der Stoffzusammensetzung z.B. in Form eines Halogenides, Perchlorates, Hexafluorophosphates oder Fettsäuresalzes oder als Doppelsalz, wie z.B. $CaCl_2$-oder $ZnCl_2$-Doppelsalz, vor.

Bevorzugte erfindungsgemässe Stoffzusammensetzungen enthalten ein gelbes, oranges, rotes, braunes oder violettes Metallkomplexpigment und ein anionisches Derivat davon, wobei als anionisches Derivat eine Verbindung enthaltend mindestens eine Gruppe der Formel $-SO_3^{\ominus}X^{\oplus}$ bevorzugt ist, und X die oben angegebene Definition und Bevorzugung hat.

Bevorzugte erfindungsgemässe Stoffzusammensetzungen enthalten

a) ein Metallkomplexpigment der Formeln I bis X

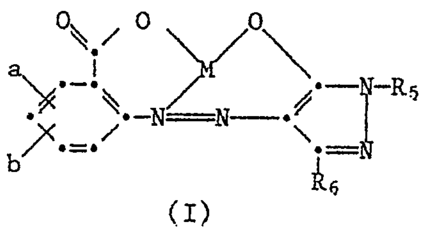

(I)

,

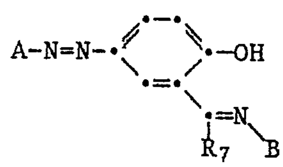

(II)

als 1:1 oder 1:2-M-Komplex,

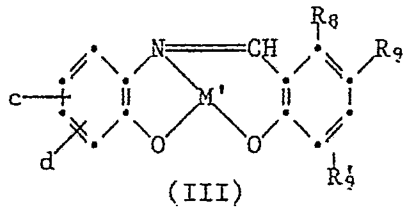,

(III)

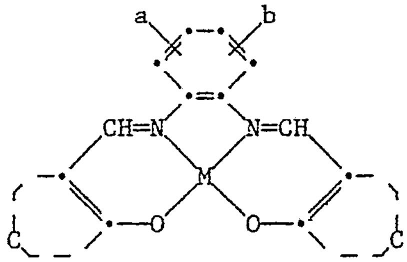,

(IV)

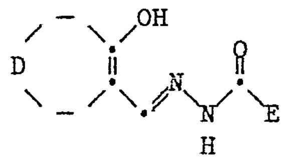 als 1:1- oder 1:2-M-Komplex,

(V)

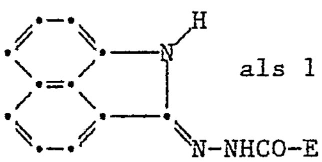 als 1:2-M-Komplex,

(VI)

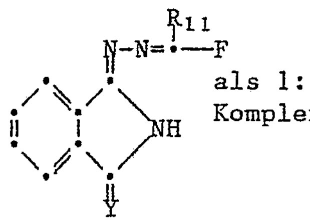 als 1:1-M-Komplex,

(VII)

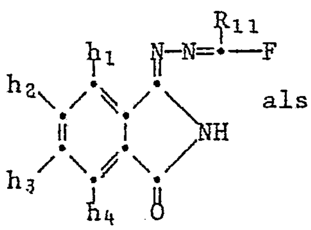 als 1:1-M-Komplex,

(VIII)

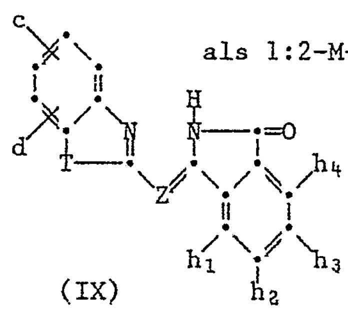 als 1:2-M-Komplex

(IX)

oder

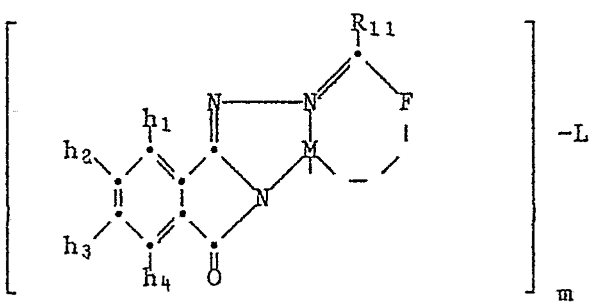

(X)

und

b) mindestens ein anionisches Derivat eines Metallkomplexes der Formeln I bis X, enthaltend mindestens eine Gruppe der Formel $-SO_3^{\ominus}\ \frac{X^{2\oplus}}{2}$, wobei die Komponenten a) und b) in der Zusammensetzung den gleichen

oder einen verschiedenen, vorzugsweise aber den gleichen Strukturtypus gemäss Formeln I bis X aufweisen, und $X^{2\oplus}$ ein Erdalkalimetallkation darstellt,
wobei in den Formeln I, II und IV bis X M ein zweiwertiges Ni-, Cu-, Co- oder Zn-Kation ist, und in der Formel III M' Cu oder Ni ist, in der Formel I
$R_5$ -H, unsubstituiertes Phenyl oder Phenyl, das durch 1 bis 2 gleiche oder verschiedene Substituenten aus der Gruppe bestehend aus Chloratomen, Methyl- und Methoxygruppen substituiert sein kann, und $R_6$ $-CH_3$, $-COOCH_3$, $-COOC_2H_5$ oder $-CONH_2$ bedeuten und a und b unabhängig voneinander -H, -Cl, $-CH_3$, $-NO_2$, $-NHCOCH_3$ oder $-SO_2NH_2$ sind, in der Formel II
A unsubstituiertes Phenyl oder Phenyl, das durch 1 bis 3 gleiche oder verschiedene Substituenten aus der Gruppe bestehend aus Chlor- und Bromatomen oder Methyl- und Methoxygruppen, ferner durch $-NO_2$, $-CF_3$, -CN, $-CONH_2$, $-CONHC_1$-$C_3$-Alkyl, $-NHCOC_1$-$C_3$-Alkyl, $-NHCOC_6H_5$, $-SO_2NH_2$, $-COOC_1$-$C_3$-Alkyl substituiert sein kann, $R_7$ -H oder $-CH_3$ und B -H, -OH, $-NHCONHR_5$, $-NHCSNH_2$, $-NHC(NH)NH_2$, $-NHR_5$ oder $-NHCOR_5$ darstellen, wobei $R_5$ die oben angegebene Bedeutung hat,
in der Formel III
$R_8$ -H, und $R_9$ und $R_9'$ unabhängig voneinander -H, -Cl, $-CH_3$ oder $-OCH_3$ bedeuten oder $R_8$ und $R_9$ zusammen mit dem benachbarten Kohlenstoffatom, an das sie gebunden sind, einen Benzolring darstellen, und c und d unabhängig voneinander -H, -Cl, $-CH_3$, $-OCH_3$, $-COOCH_3$, $-COOC_2H_5$, $-CONH_2$, $-SO_2NH_2$ oder $-NHCOCH_3$ bedeuten,
in der Formel IV
a und b die oben angegebene Bedeutung haben,
C zusammen mit den zwei benachbarten Kohlenstoffatomen, an die C gebunden ist, einen Benzol- oder Naphthalin-1,2-rest oder einen Rest der Formeln

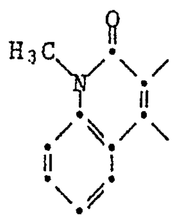 , 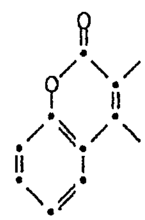 oder 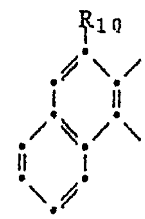

darstellt, wobei $R_{10}$ -H, -COOH oder einen N-Phenylcarbamidorest bedeutet, wobei der Phenylrest durch 1 bis drei gleiche oder verschiedene Substituenten aus der Gruppe bestehend aus Chloratomen, Methyl- oder Methoxygruppen, ferner durch $-NO_2$, $-NHCOC_1$-$C_3$-Alkyl oder $-NHCOC_6H_5$ substituiert sein kann,
in der Formel V
D zusammen mit den zwei benachbarten Kohlenstoffatomen, an die D gebunden ist, einen unsubstituierten oder durch -Cl oder -Br substituierten Benzol- oder Naphthalin-1,2-rest oder einen Rest der Formeln

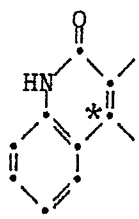 , 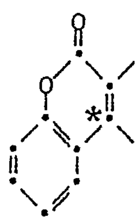 oder 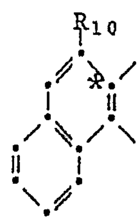 darstellt, wobei

darstellt, wobei die HO-Gruppe gemäss Formel V an das mit einem Stern bezeichnete Kohlenstoffatom gebunden ist,
$R_{10}$ die oben angegebene Bedeutung hat, und E unsubstituiertes oder durch 1 bis 2 gleiche oder verschiedene Substituenten aus der Gruppe bestehend aus $-CH_3$, $-OCH_3$, -Cl, -Br oder $-NO_2$ substituiertes Phenyl oder unsubstituiertes oder durch -Cl, -Br oder $-CH_3$ substituiertes Pyridyl ist,
in der Formel VI
E die oben angegebene Definition hat,
in der Formel VII
$R_{11}$ -H oder $-CH_3$ ist, F für einen Rest der Formeln

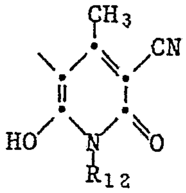, 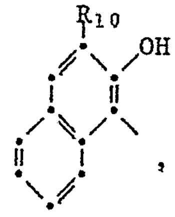, 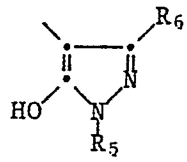, 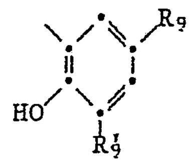,

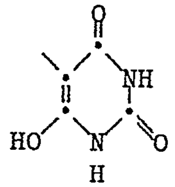, 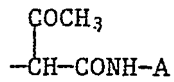, 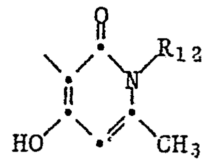,

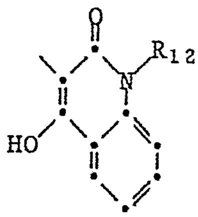 oder 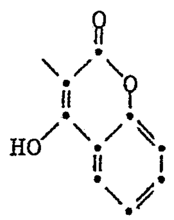 steht, oder

F und $R_{11}$ zusammen mit dem benachbarten Kohlenstoffatom, an das sie gebunden sind, einen Rest der Formel

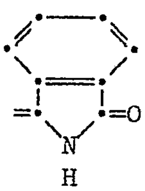

bilden, wobei $R_{12}$ -H oder $C_1$-$C_3$-Alkyl bedeutet und $R_5$, $R_6$, $R_9$, $R_9'$ und $R_{10}$ die oben angegebene Bedeutung haben, und Y für einen Rest der Formeln

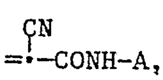, 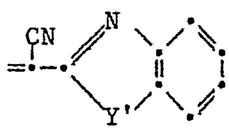 oder 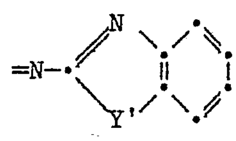 steht ,

A die oben angegebene Bedeutung hat, und Y' -NH-, -O- oder -S- bedeutet,
in der Formel VIII
F und $R_{11}$ die oben angegebene Bedeutung haben, $h_1$ bis $h_4$ -H oder -Cl, oder $h_1$ und/oder $h_3$ $-OCH_3$ und die restlichen h -Cl bedeuten,
in der Formel IX
T -NH-, -O- oder -S- bedeutet,
Z für den Rest =N- oder $=\overset{CN}{C}-$ steht, und c und d sowie $h_1$ bis $h_4$ die oben angegebene Bedeutung haben, und
in der Formel X
F, $R_{11}$ sowie $h_1$ bis $h_4$ die oben angegebene Bedeutung haben, wobei der Rest F über ein α-ständiges Sauerstoffatom an M gebunden ist, L $-NH_3$ und m die Zahl 1, oder L $-NH_2CH_2CH_2NH_2$- oder Piperazin und m die Zahl 2 bedeuten.

Besonders bevorzugte Metallkomplexpigmente gemäss den Formeln I, II, IV bis VIII und X sind Nickel- oder Kupfer-Komplexe, gemäss Formel III Kupfer-Komplexe und gemäss Formel IX Cobalt-II-Komplexe.

Bei der Komponente b) der erfindungsgemässen Stoffzusammensetzungen kann die Gruppe der Formel $-SO_3^{\ominus}\,\frac{X^{2\oplus}}{2}$ im Aldehyd- oder Ketonteil oder/und im anderen Teil des Metallkomplexmoleküls (z.B. im Amin-, Azin-, Oxim-, Hydrazon-, Benzimidazol-, Isoindolin- oder Isoindolinonteil) sein. $X^{2\oplus}$ stellt als Erdalkalimetallka-

tion z.B. $Mg^{2\oplus}$, $Ba^{2\oplus}$, $Sr^{2\oplus}$ und insbesondere $Ca^{2\oplus}$ dar.

Stellt E Pyridyl dar, so handelt es sich um o- , m- und insbesondere p-Pyridyl.

Stellen Substituenten in den verschiedenen Bezeichnungen gemäss Formeln I bis IX einen $C_1$-$C_3$-Alkylrest dar, so handelt es sich um Methyl, Aethyl, n-Propyl oder Isopropyl.

Besonders bevorzugte erfindungsgemässe Stoffzusammensetzungen enthalten als Komponente a) ein Metallkomplexpigment der Formeln III, IV und IX, wobei in der Formel III M' Kupfer und die Substituenten c und d sowie $R_9^1$ -H bedeuten und $R_8$ und $R_9$ zusammen mit dem benachbarten Kohlenstoffatom, an das sie gebunden sind, einen Benzolring bilden, in der Formel IV M Nickel ist, a und b -H bedeuten, C zusammen mit den zwei benachbarten Kohlenstoffatomen, an die C gebunden ist, eine Gruppe der Formel

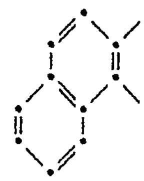

bildet, und in der Formel IX T -NH- , M Co, c und d sowie $h_1$ bis $h_4$ -H und Z -N= oder NC bedeuten.

Ebenfalls bevorzugte erfindungsgemässe Stoffzusammensetzungen enthalten als Komponente a) eine Verbindung der Formel III und als Komponente b) ein anionisches Derivat eines Metallkomplexes der Formel III enthaltend eine Gruppe der Formel $-SO_3^{\ominus}\frac{X^{2\oplus}}{2}$, wobei in der Formel III für beide Komponenten a) und b) M' Kupfer und die Substituenten c und d sowie $R_9^1$ -H sind, und $R_8$ und $R_9$ zusammen mit den benachbarten Kohlenstoffatomen, an die sie gebunden sind, einen Benzolring bilden, und für die Komponente b) $X^{2\oplus}$, ein Erdalkalimetallkation darstellt.

Die Mengenverhältnisse der Komponenten der erfindungsgemässen Stoffzusammensetzungen betragen vevorzugt 1 bis 10 Gew.% der Komponente b) zu 99 bis 90 Gew.% der Komponente a), insbesondere aber 2 bis 8 Gew.% der Komponente b) zu 98 bis 92 Gew.% der Komponente a) und bevorzugt 4 bis 6 Gew.% der Komponente b) zu 96 bis 94 Gew.% der Komponente a).

Die erfindungsgemäss in Frage kommenden Metallkomplexpigmente sind bekannt und können nach bekannten Verfahren hergestellt werden.

Gewisse kationische sowie nionische Derivate der obigen Metallkomplexpigmente sind bekannt. Dagegen sind bestimmte anionische Derivate, die mindestens eine Gruppe der Formel $-SO_3^{\ominus}X^{\oplus}$ enthalten, worin X die oben angegebene Bedeutung hat, neu.

Einen weiteren Erfindungsgegenstand bilden demnach die Metallkomplexe der Formeln XI, XII und XIII

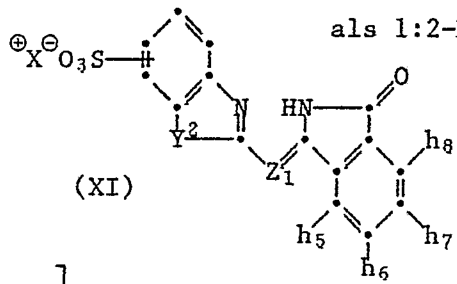

als 1:2-M-Komplex,

(XI)

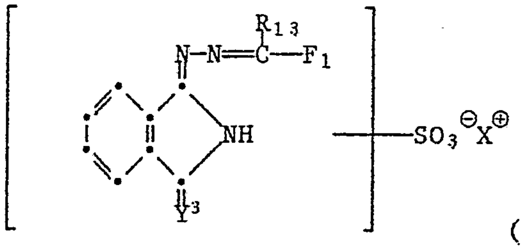

als 1:1-M-Komplex,

(XII)

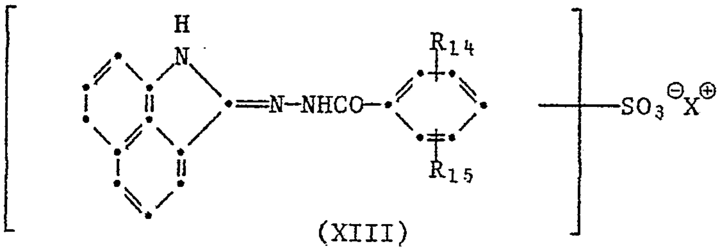

als 1:1-M-Komplex,

(XIII)

worin
in der Formel XI
$h_5$, $h_6$, $h_7$ und $h_8$ -H oder -Cl, oder $h_5$ und/oder $h_7$ $-OCH_3$ und die restlichen h -Cl, M Co, Ni, Cu oder Zn, $Y^2$ -NH- , -O-oder -S- , $Z_1$ den Rest =N- oder

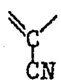

, und X eine Gruppe der Formeln $\frac{M^{n\oplus}}{n}$ oder $N^{\oplus}(R_1)(R_2)(R_3)(R_4)$ bedeuten, wobei $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, Benzyl, unsubstituiertes oder durch $C_1$-$C_{18}$-Alkyl substituiertes Phenyl bedeuten, oder $R_3$ und $R_4$ zusammen mit dem N-Atom einen Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chinolin- oder Isochinolinrest bilden,
in der Formel XII
M Ni oder Cu, und $R_{13}$ -H oder $C_1$-$C_3$-Alkyl bedeuten, oder $R_{13}$ und $F_1$ zusammen mit dem benachbarten Kohlenstoffatom, an das sie gebunden sind, einen Rest der Formel

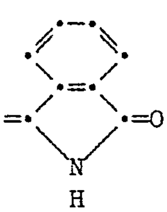

bilden, ferner
$F_1$ einen Rest der Formeln

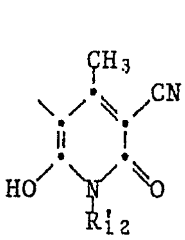, 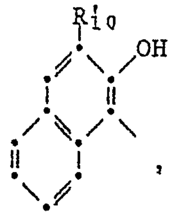, 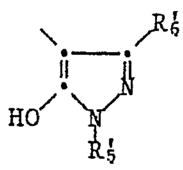, 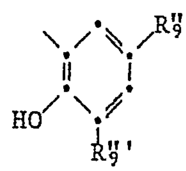,

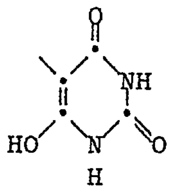, 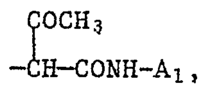 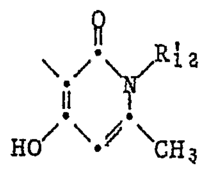,

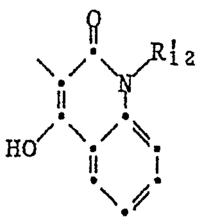 oder 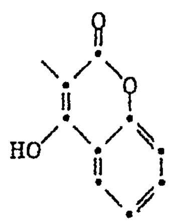 darstellt, wobei

$R_5^!$ -H, unsubstituiertes Phenyl oder Phenyl ist, das durch 1 bis 2 gleiche oder verschiedene Substituenten aus der Gruppe bestehend aus Chloratomen, Methyl- und Methoxygruppen substituiert sein kann, $R_6^!$ -$CH_3$, -$COOCH_3$, -$COOC_2H_5$ oder -$CONH_2$, und $R_9''$ und $R_9''$ ' unabhängig voneinander -H, -Cl, -$CH_3$ oder -$OCH_3$ bedeuten, ferner $R_{10}^!$ -H, -COOH oder einen N-Phenylcarbamidorest bedeutet, wobei der Phenylrest durch ein bis drei gleiche oder verschiedene Substituenten aus der Gruppe bestehend aus Chloratomen, Methyl- oder Methoxygruppen, ferner durch -$NO_2$, -NHCO-$C_1$-$C_3$-Alkyl oder -$NHCOC_6H_5$ substituiert sein kann, $R_{12}^!$ -H oder $C_1$-$C_3$-Alkyl bedeutet,
$A_1$ unsubstituiertes Phenyl oder Phenyl bedeutet, das durch 1 bis 3 gleiche oder verschiedene Substituenten aus der Gruppe bestehend aus Chlor- und Bromatomen oder Methyl- und Methoxygruppen, ferner durch -$NO_2$, -$CF_3$, -CN, -$CONH_2$, -$CONHC_1$-$C_3$-Alkyl, -$NHCOC_1$-$C_3$-Alkyl, -$NHCOC_6H_5$, -$SO_2NH_2$, -$COOC_1$-$C_3$-Alkyl substituiert sein kann, und
$Y^3$ für einen Rest der Formeln

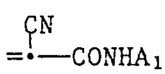 , 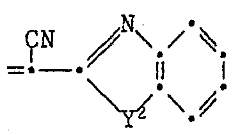 oder 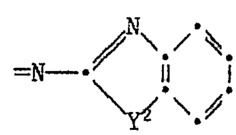

steht, und $A_1$ die oben angegebene Bedeutung hat, $Y^2$ -NH- , -O- oder -S- darstellt, und $X^{\oplus}$ die oben für die Formel XI angegebene Bedeutung hat, und
in der Formel XIII
M Cu oder Ni, $R_{14}$ und $R_{15}$ unabhängig voneinander -H, -$CH_3$, -$OCH_3$, -Cl und -Br bedeuten, und X die oben für die Formel XI angegebene Bedeutung hat.

Bevorzugte Metallkomplexe sind Verbindungen der Formel XI und XII, worin in der Formel XI M Co, $Y^2$ -NH-, $Z_1$ =N- oder 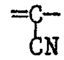 , $h_5$, $h_6$, $h_7$ und $h_8$ -H und X eine Gruppe der Formel $\frac{M^{n\oplus}}{n}$ bedeuten, wobei $M^{n\oplus}$ ein Erdalkalimetallkation, insbesondere aber $Ca^{2\oplus}$, ist,
und in der Formel XII M Ni oder Cu ist, $F_1$ und $R_{13}$ die oben angegebene Bedeutung haben, und $Y^3$ einen Rest der Formeln

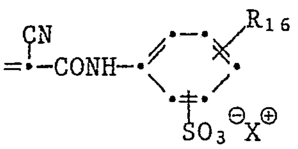

oder

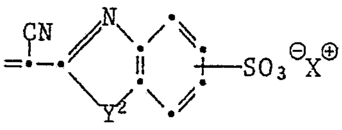

darstellt, wobei $R_{16}$ -H , $-CH_3$ oder $-OCH_3$ , und $Y^2$ -O- , -S- oder -NH- bedeuten, und X die oben angegebene Bedeutung hat.

In der Formel (XIII) ist die Gruppe $-SO_3^{\ominus}X^{\oplus}$ bevorzugt an den Naphtholactamkern gebunden, und X steht für eine Gruppe der Formel $\frac{M^{n\oplus}}{n}$ ,

wobei $M^{n\oplus}$ ein Erdalkalimetallkation, insbesondere $Ca^{2\oplus}$, bedeutet.

Sowohl die bekannten als auch die neuen Derivate gemäss Komponente b) können in Analogie zu an sich bekannten Verfahren erhalten werden, z.B. durch Umsetzung des Metallkomplexes enthaltend mindestens eine freie Sulfogruppe oder bevorzugt das Natriumsalz davon, mit einem Salz der Formel $X^{\oplus}L^{\ominus}$,

worin $X^{\oplus}$ eine der Gruppen $\frac{M^{n\oplus}}{n}$ oder $N^{\oplus}(R_1)(R_2)(R_3)(R_4)$ mit der oben angegebenen Bedeutung ist und $L^{\ominus}$ z.B. ein Hydroxy-, Chlorid-, Acetat- oder Nitrat-Ion ist. Die hierfür benötigten Metallkomplexe werden ihrerseits nach den gleichen Verfahren wie für die Herstellung der obenerwähnten Metallkomplexpigmente hergestellt, wobei aber mindestens eines der benötigten Ausgangsprodukte oder der Ligand eine $-SO_3H$- oder $-SO_3Na$-Gruppe aufweist.

Zur Herstellung der erfindungsgemässen Stoffzusammensetzungen wird zweckmässig die Komponente a) zuerst nach üblichen Methoden konditioniert und in Wasser suspendiert. Die Komponente b) kann bei spielsweise als freie Sulfosäure zugefügt, ein Salz der Formel $X^{\oplus}L^{\ominus}$und gegebenenfalls eine schwache Base, wie Natriumacetat, zugesetzt werden, oder als Sulfonsäurenatriumsalz zugefügt und ein Salz der Formel $X^{\oplus}L^{\ominus}$ zur Fällung eines schwerlöslicheren Salzes als das Na-Salz (Umfällung) zugesetzt werden.

Die Zugabe der Komponente b) erfolgt vor, während oder, wie bereits erwähnt, vorzugsweise nach der Konditionierung der Komponente a). Unter Konditionierung versteht man die Herstellung einer feinen Partikelform, beispielsweise durch Trockenmahlung mit oder ohne Salz, durch Lösungsmittel- oder wässrige Mahlung oder vorzugsweise durch Salzknetung.

Je nach Konditionierverfahren und/oder Applikationszweck kann es von Vorteil sein, dem Pigment neben dem erfindungsgemässen Zusatz der Komponente b) gewisse Mengen an texturverbessernden Mitteln vor oder nach dem Konditionierprozess zuzufügen. Als solche kommen insbesondere Fettsäuren mit mindestens 18 C-Atomen, beispielsweise Stearin-oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew.%, bezogen auf das Endprodukt, zugesetzt.

Die erfindungsgemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formal dehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen insbesondere in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwedungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material kann man die erfindungsgemässen Stoffzusammensetzungen beispielsweise in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch- oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung der erfindungsgemässen Stoffzusammensetzungen in

die Polymeren eingearbeitet werden. Es ist ferner möglich, zwecks Erzielung verschiedener Farbtöne den hochmolekularen, organischen Stoffen neben den er findungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie gute Verteilung, hohe Transparenz, und Reinheit, einen guten Glanz, gute Ueberlackier-, Migrations-, Hitze-, Licht- und Wetterbeständigkeit, aus.

Ausserdem weisen die erfindungsgemässen Stoffzusammensetzungen im Vergleich zu den unmodifizierten Metallkomplexpigmenten insbesondere in Lacken und Druckfarben eine verbesserte Rheologie und Lagerbeständigkeit, geringere Trenneffekte, wie Ausschwimmen bei der Mitverwendung von Weisspigmenten, und geringere Flokkulationstendenz, auf.

Infolge der guten rheologischen Eigenschaften der erfindungsgemässen Pigmentzusammensetzungen ist es möglich, Lacke hoher Pigmentkonzentration (high loadings) herzustellen.

Die erfindungsgemässen Stoffzusammensetzungen eignen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung.

Beispiel 1:

600 g einer 10%igen wässerigen Anschlämmung der Verbindung der Formel

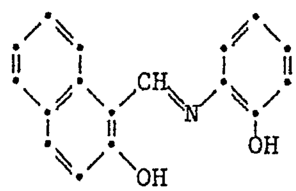

als 1:1-Cu-Komplex werden auf 70-75° C erwärmt, dann wird die Lösung aus 3 g des Derivates (Komponente b) der Formel

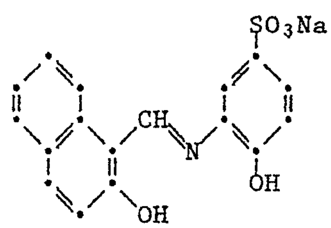

als 1:1-Cu-Komplex und 100 ml Wasser zugegeben, und die erhaltene Mischung wird während 30 Minuten gerührt. Zu diesem Gemisch wird dann eine Lösung von 0,8 g Calciumchlorid in 20 ml Wasser zugefügt, und das Gemisch wird nochmals 1/2 Stunde bei 70-75°C gerührt. Dann wird das Produkt abfiltriert, mit 600 ml Wasser gewaschen und bei 80° C im Vakuumschrank getrocknet. Nach Siebung liegt ein olive-farbenes Pulver vor, das Lacke mit günstigem Fliessverhalten liefert. Die daraus resultierenden gelben Ausfärbungen sind transparent. Das oben genannte Derivat wird nach an sich bekannten Verfahren z.B. durch Kondensation von 2-Hydroxy-naphthaldehyd mit 2-Aminophenol-4-sulfonsäure in Aethanol in Gegenwart von Natriumacetat und anschliessende Metallisierung mit Kupferacetat in Dimethylformamid gewonnen.

Setzt man statt 3 g 1,8g, 6 g oder 12 g der obigen Komponente b sowie statt 0,8 g 0,59 g, 1,6 g oder 3,2 g Calciumchlorid ein, so werden Stoffzusammensetzungen erhalten, welche in Lacken ebenfalls ausgezeichnete Eigenschaften aufweisen.

Beispiel 2:

90 g des Pigmentes der Formel

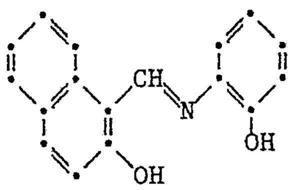

als 1:1-Cu-Komplex werden zusammen mit 360 g feingemahlenem Natriumchlorid und 130 ml Diacetonalkohol in einer Laborknetmaschine (Typ 1 LNS der Firma MEILI) geknetet. Die Temperatur der Knetmasse beträgt ca. 40°C. Nach 4-stündiger Knetdauer wird die Masse ausgeladen und zusammen mit 4 Litern Wasser während 4 Stunden bis zur vollständigen Auflösung des Natriumchlorids gerührt. Danach wird das Pigment abfiltriert und mit ca. 10 Litern Wasser salzfrei gewaschen. Der wasserfeuchte Presskuchen wird in so viel Wasser angeschlämmt, dass eine 10 %ige Suspension des feinteiligen Pigmentes entsteht. Dieser auf 70-75°C erwärmten Suspension wird die Lösung aus 4,7 g des Derivates der Formel

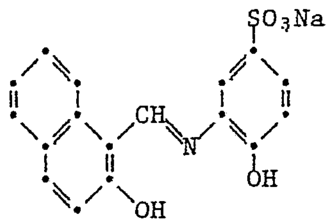

als 1:1-Cu-Komplex und 150 ml Wasser zugegeben. Die erhaltene Suspension wird während 30 Minuten gerührt, eine Lösung aus 10 g Calciumchlorid und 150 ml Wasser wird dann zugefügt, und das Gemisch wird nochmals 1/2 Stunde bei 70-75°C gerührt. Dann wird das Pigment abfiltriert, mit einem Liter Wasser gewaschen und bei 80°C im Vakuumschrank getrocknet. Nach Siebung liegt ein olive-farbenes Pulver vor, das Lacke mit günstigem Fliessverhalten und gelbe Ausfärbungen liefert.

Das oben genannte Derivat (Komponente b) wird wie in Beispiel 1 beschrieben hergestellt.

Ebenfalls ein wertvolles Pigmentgemisch wird erhalten, wenn man der Knetmasse zu Beginn, während oder am Ende der Knetung 4,7 g des oben erwähnten Derivates und 10 g wasserfreies Calciumchlorid zusetzt. Nach Beendigung der Knetung wird die Knetmasse während 4 Stunden mit 4 Litern Wasser verrührt, und anschliessend wird das Pigment zusammen mit dem ausgefällten Ca-Salz des obigen Derivates (Komponente b) filtriert, mit Wasser chloridfrei gewaschen und bei 80°C im Vakuumschrank getrocknet. Nach Siebung liegt ebenfalls ein olivefarbenes Pulver vor, das Lacke mit günstigem Fliessverhalten liefert. Die daraus resultierenden Ausfärbungen sind gelb und zeigen eine hohe Transparenz.

Aehnlich wertvolle Pigmentgemische werden erhalten, wenn man statt 4,7 g 2,8 g bzw. 9,5 g des oben erwähnten Derivates (Na-Salz) einsetzt.

Beispiel 3-16:

Weitere erfindungsgemässe Stoffzusammensetzungen werden erhalten, wenn man wie in Beispiel 1 oder 2 arbeitet, anstelle der dort beschriebenen Komponente b aber ein der in Tabelle 1 aufgeführten Metallkomplexderivate einsetzt.

Die in den Beispielen 1-15 eingesetzten Komponenten b) sind Salze von Komplexanionen, jene in Beispiel 16 ist das Salz eines Komplexkations.

Tabelle 1

| Beispiel Nr. | Komponente b | | |
|---|---|---|---|
| | M:L(*) | M | Ligand (L) |
| 3 | 1:1 | Ni | 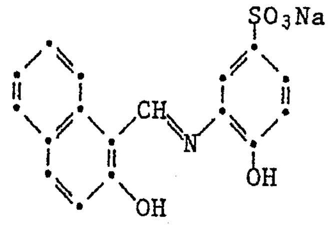 |
| 4 | 1:1 | Cu | 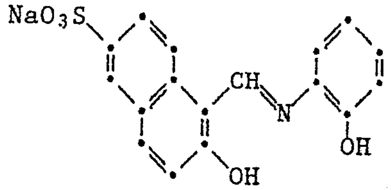 |
| 5<br>6<br>7 | 1:1<br>1:1<br>1:1 | Co<br>Ni<br>Cu | 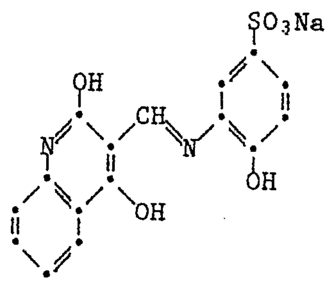 |
| 8<br>9<br>10 | 1:1<br>1:1<br>1:1 | Co<br>Ni<br>Cu | 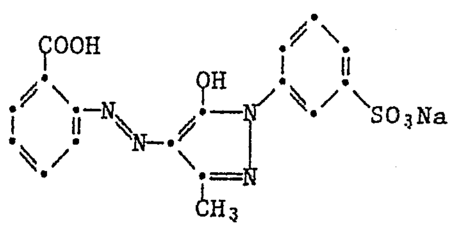 |
| 11<br>12 | 1:2<br>1:2 | Ni<br>Cu | 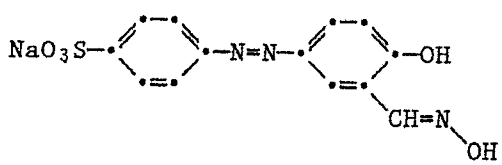 |
| 13<br>14 | 1:2<br>1:2 | Co<br>Ni | 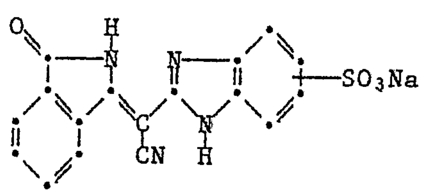 |

(*) Verhältnis Uebergangsmetall M zu Ligand L.

Tabelle 1 (Fortsetzung)

| Bei- | Komponente b | | |
|---|---|---|---|
| spiel Nr. | M:L(*) | M | Ligand (L) |
| 15 | 1:2 | Co | 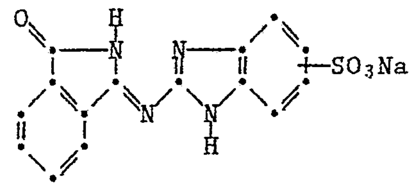 |
| 16 | 1:1 | Cu | 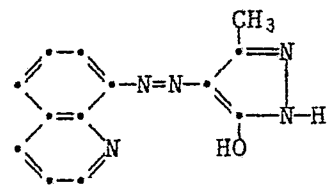 |

(*) Verhältnis Uebergangsmetall M zu Ligand L

Beispiel 17:

17a) 100 g einer wässrigen Suspension (10 % Festanteil; erhalten durch kurze Glaskugelmahlung) des Pigmentes der Formel

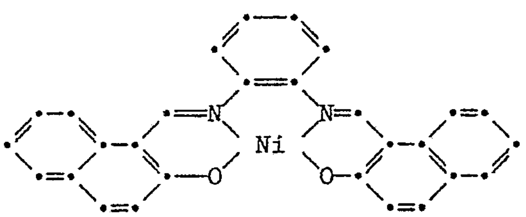

werden auf 70-75° C erwärmt; dieser Suspension wird dann eine Lösung aus 1 g des Derivates (Komponente b) der Formel

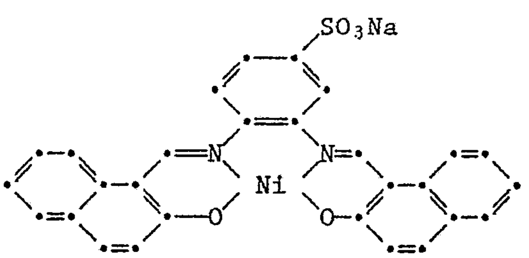

und 20 ml Wasser zugegeben. Nach 30 Minuten Rühren wird der erhaltenen Suspension eine Lösung von 0,4 g $CaCl_2$ in 20 ml Wasser zugegeben, und das Gemisch wird während 30 Minuten bei 70-75° C gerührt. Dann wird das Produkt abfiltriert, mit 100 ml Wasser gewaschen und bei 80° C im Vakuumschrank getrocknet. Das Pigmentgemisch liefert orange Lacke mit günstigem Fliessverhalten.

Das oben beschriebene Derivat (Komponente b) kann z.B. durch Kondensation von 2-Hydroxy-naphtaldehyd mit o-Phenylendiamin-4-sulfonsäure in Isopropanol in Gegenwart von Natriumacetat und anschliessende Komplexbildung mit einem $Ni^{2+}$-Salz nach dem in Beispiel 7 der europäischen Patentanmeldung Nr. 162 811 beschriebenen Verfahren hergestellt werden.

17b) Ebenfalls wertvolle Pigmentzusammensetzungen werden erhalten, wenn man statt 1 g 0,5 g oder 2 g des obigen Derivates (Komponente b) und entsprechende Mengen $CaCl_2$ einsetzt.

Beispiel 18:

Ein wässriger Presskuchen enthaltend 10 g Rohpigment mit der im Beispiel 17a) angegebenen Formel wird in 100 ml Wasser unter Rühren auf 70-75° C erwärmt und gleich behandelt wie in Beispiel 17a). Das Produkt weist ebenfalls gute Pigmenteigenschaften in Lacken auf.

Beispiel 19-30:

Weitere erfindungsgemässe Pigmentzusammensetzungen werden erhalten, wenn man wie in Beispiel 17a) oder 18 vorgeht, aber die in Tabelle 2 aufgeführten Derivate (Komponente b) einsetzt.

Das Derivat kann anstelle von $CaCl_2$ auch mit den in Tabelle 2 aufgeführten Kationen (als Chlorid oder Sulfat) gefällt werden.

Tabelle 2

| Beispiel Nr. | Derivat (Komponente b) Ligand (L) | Metall: L(*) | Kation |
|---|---|---|---|
| 19 | 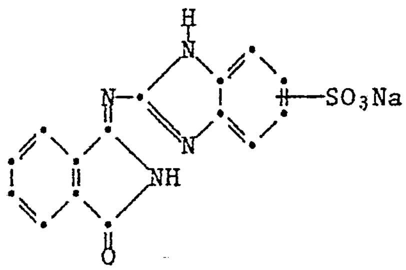 | 1:2 $Co^{2+}$ | $Ca^{2+}$ |
| 20 | 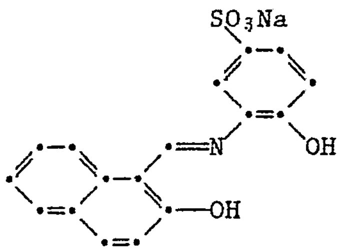 | 1:1 $Cu^{2+}$ | $Ca^{2+}$ |
| 21 | 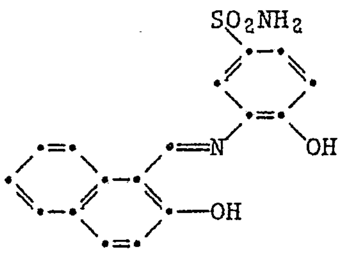 | 1:2 $Cr^{3+}$ (als Na-Salz) | $Ca^{2+}$ |
| 22 | | 1:2 $Co^{3+}$ (als Na-Salz) | $Ca^{2+}$ |
| 23 | 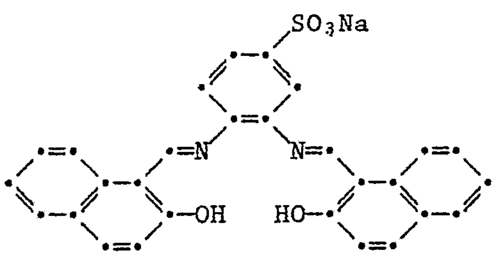 | 1:1 $Cu^{2+}$ | $Ca^{2+}$ |
| 24 | | 1:1 $Ni^{2+}$ | $K^{\oplus}$ |
| 25 | | 1:1 $Ni^{2+}$ | $Ba^{2+}$ |
| 26 | | 1:1 $Ni^{2+}$ | $Al^{3+}$ |
| 27 | | 1:1 $Ni^{2+}$ | $Mn^{2+}$ |
| 28 | 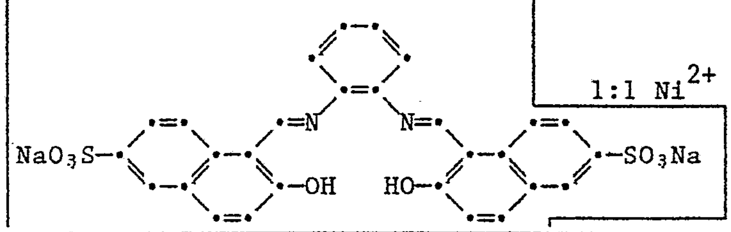 | 1:1 $Ni^{2+}$ | $Ca^{2+}$ |

(*) Verhältnis Metall zu Ligand L

Tabelle 2: (Fortsetzung)

| Bei- spiel Nr. | Derivat (Komponente b) | | |
|---|---|---|---|
| | Ligand (L) | Metall: L(*) | Kation |
| 29 | 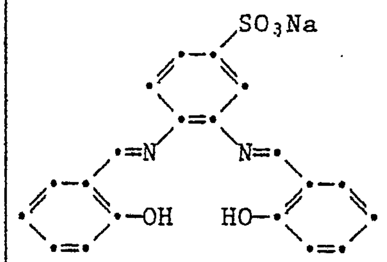 | 1:1 $Ni^{2}$ | $Ca^{2+}$ |
| 30 | 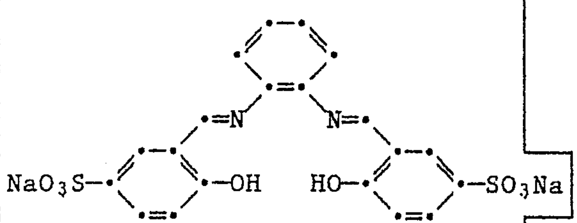 | 1:1 $Cu^{2+}$ | $Al^{3+}$ |

(*) Verhältnis Metall zu Ligand L

Beispiel 31:

100 g einer 10 %igen wässerigen Suspension des feingemahlenen Pigmentes der Formel

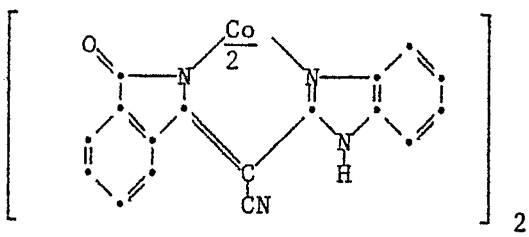

werden auf 70°C erwärmt. Dieser Suspension wird die wässerige Lösung von 1 g des Derivates der Formel

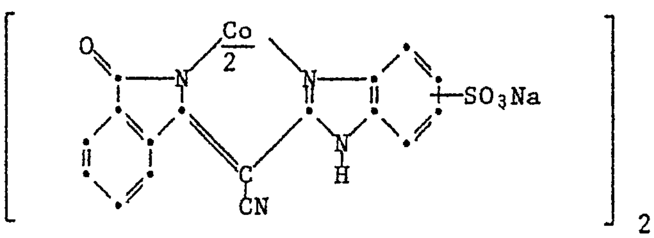

zugefügt, das erhaltene Gemisch wird während 30 Minuten gerührt, mit 0,4 g Calciumchlorid (gelöst in wenig Wasser) versetzt und 1/2 Stunden gerührt. Dann wird das Produkt abfiltriert, mit Wasser gewaschen, bei 80°C im Vakuumschrank getrocknet und gesiebt. Durch Anreiben oder Dispergieren liefert es gelb gefärbte Lacke mit vorteilhafter Rheologie.

Zur Herstellung des oben beschriebenen Derivates wird der Ligand der Formel

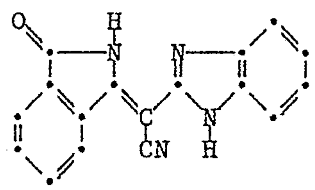

in 10 %igem Oleum bei Raumtemperatur sulfoniert, und das erhaltene Produkt wird in Aethanol mit Kobaltacetat zum 1:2-Co-Komplex umgesetzt.

Beispiel 32-36:

Weitere erfindungsgemässe Pigmentzusammensetzungen werden erhalten, wenn man wie in Beispiel 31 beschrieben vorgeht, anstelle der dort angegebenen Komponente b aber eines der in Tabelle 3 aufgeführten Metallkomplexderivate einsetzt.

Tabelle 3:

| Beispiel Nr. | Komponente b | | |
|---|---|---|---|
| | M:L(*) | M | Ligand (L) |
| 32 | 1:1 | Cu | 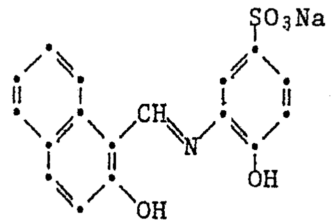 |
| 33 | 1:1 | Cu | 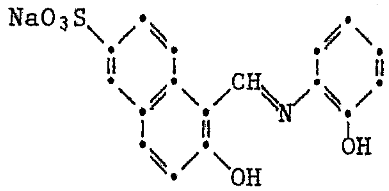 |
| 34 | 1:1 | Ni | 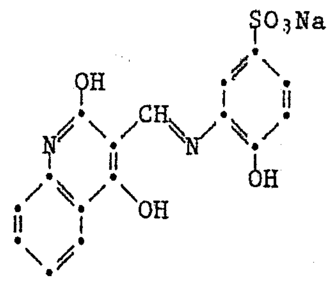 |
| 35 | 1:2 | Ni | 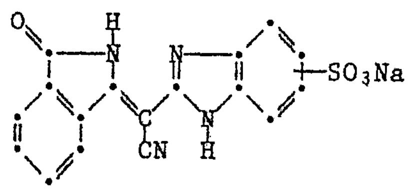 |
| 36 | 1:2 | Co | 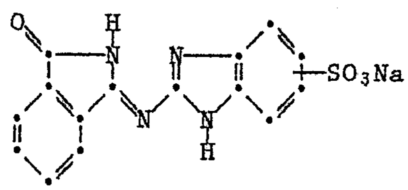 |

(*) Verhältnis Uebergangsmetall zu Ligand L

Beispiel 37:

Eine wässerige Suspension enthaltend 60 g eines Pigments der Formel

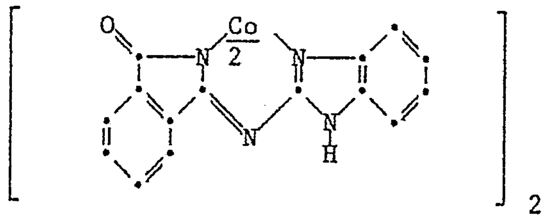

in feingemahlener Form wird bei 70°C mit der wässerigen Lösung von 3 g des Derivates der Formel

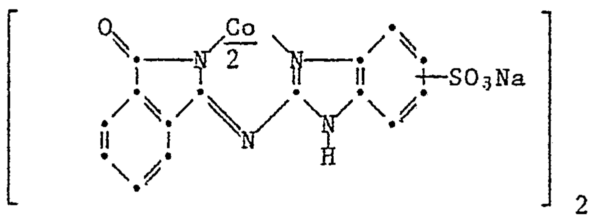

und der wässerigen Lösung von 1 g Calciumchlorid versetzt. Man rührt die Mischung 1/2 Stunde bei 70-80°C, filtriert sie dann und wäscht das Nutschgut mit Wasser. Nach Trocknen bei 80°C im Vakuumschrank erhält man 56,6 g eines gelb-braunen Pulvers, das man durch ein feines Sieb passiert. Es liefert nach Einarbeiten in Einbrennlacke transparente gelbe Ausfärbungen mit gutem Glanz. Die Lacke selbst zeichnen sich durch eine günstige Rheologie aus.

Herstellung des sulfogruppenhaltigen Derivates: Das Kobalt-komplex-Pigment wird bei Raumtemperatur mit 10 %igem Oleum versetzt, wobei die Sulfosäure des Liganden entsteht:

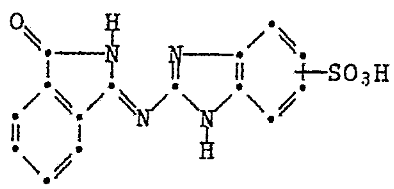

Das erhaltene Produkt wird in Aethanol mit Co-Acetat und Natriumacetat in den 1:2-Co-Komplex (Na-Salz) übergeführt.

Beispiel 38-45:

Weitere erfindungsgemässe Stoffzusammensetzungen werden erhalten, wenn man bei analoger Arbeitsweise statt des oben formulierten Derivates (Komponente b) eines der in Tabelle 4 aufgeführten Metallkomplexderivate einsetzt.

Tabelle 4

| Beispiel Nr. | Komponente b | | |
|---|---|---|---|
| | M:L(*) | M | Ligand (L) |
| 38 | 1:1 | Cu | 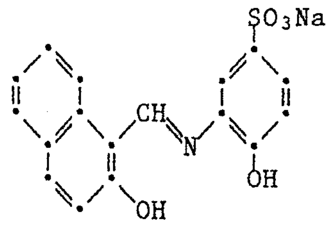 |
| 39 | 1:1 | Cu | 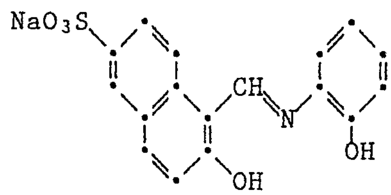 |
| 40 | 1:1 | Co | 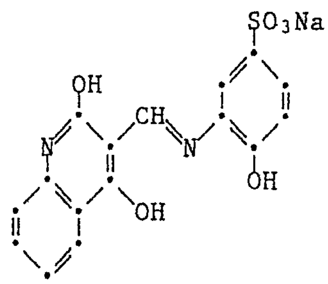 |
| 41 | 1:2 | Co(**) | 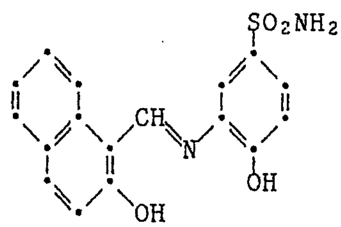 |
| 42 | 1:1 | Ni | 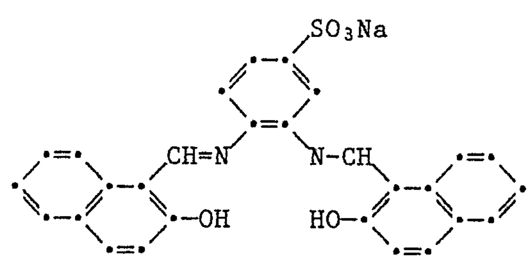 |
| 43 | 1:2 | Co | 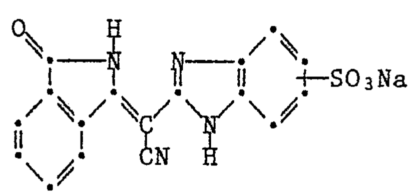 |
| 44 | 1:2 | Ni | |
| 45 | 1:2 | Cu | |

(*) Verhältnis Uebergangsmetall zu Ligand L
(**) Im vorliegenden Fall als Co(III)

Beispiel 46-53:

Weitere erfindungsgemässe Pigmentzusammensetzungen werden erhalten, wenn man wie in Beispiel 1 oder 2 arbeitet jedoch eines der in Tabelle 5 aufgeführten Pigmente (Komponente a) und Derivate (Komponente b) einsetzt.

Tabelle 5

| Beispiel Nr. | Metallkomplexpigment | | Komponente b | |
|---|---|---|---|---|
| | Komplex (*) | Ligand | Komplex (*) | Ligand |
| 46 | 1:2 Cu | 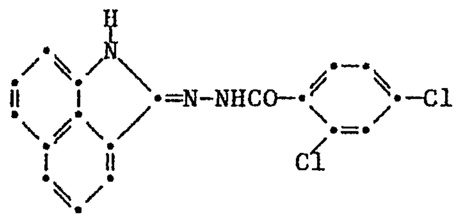 | 1:2-Cu | 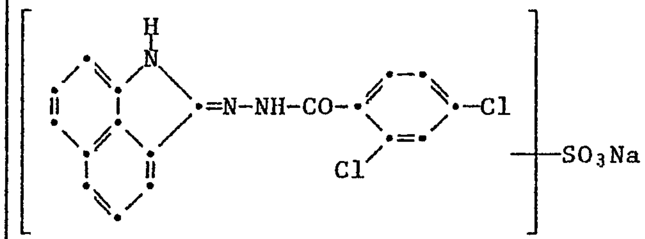 |
| 47 | 1:2-Cu | 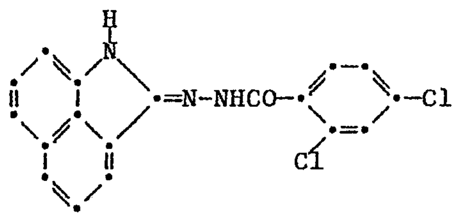 | 1:1-Cu | 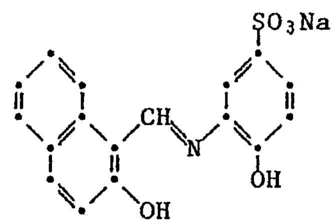 |
| 48 | 1:2-Ni | 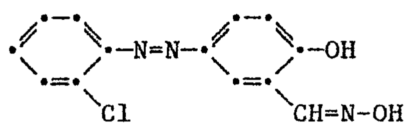 | 1:2-Ni | 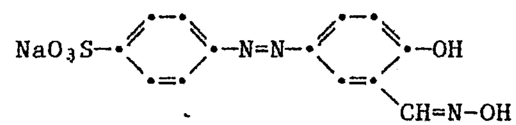 |
| 49 | 1:2-Ni | 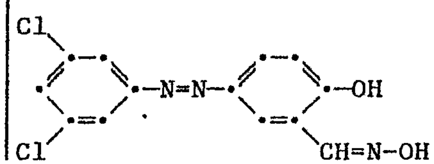 | 1:2-Ni | 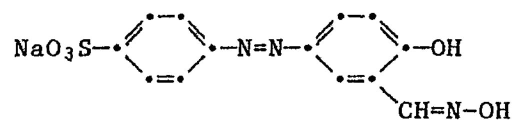 |

(*) Verhältnis Uebergangsmetall zu Ligand

Tabelle 5 (Fortsetzung)

| Beispiel Nr. | Metallkomplexpigment | | Komponente b | |
|---|---|---|---|---|
| | Komplex (*) | Ligand | Komplex (*) | Ligand |
| 50 | 1:2-Cu | 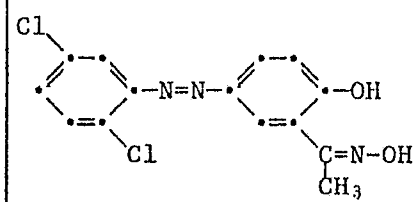 | 1:2-Cu | 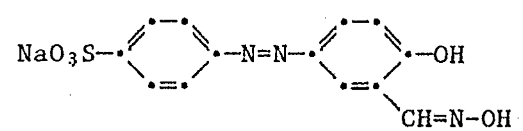 |
| 51 | 1:1-Ni | 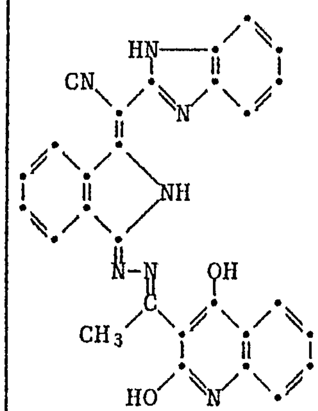 | 1:1-Ni | 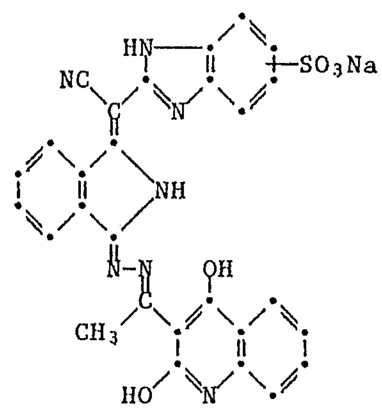 |

(*) Verhältnis Uebergangsmetall zu Ligand

Tabelle 5 (Fortsetzung)

| Bei-spiel Nr. | Metallkomplexpigment | | Komponente b | |
|---|---|---|---|---|
| | Komplex (*) | Ligand | Komplex (*) | Ligand |
| 52 | 1:1-Ni | 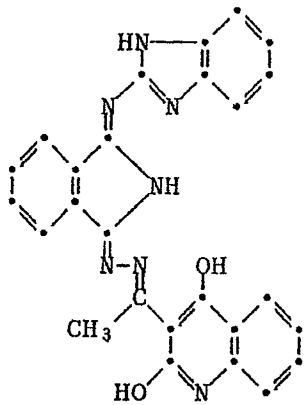 | 1:1-Ni | 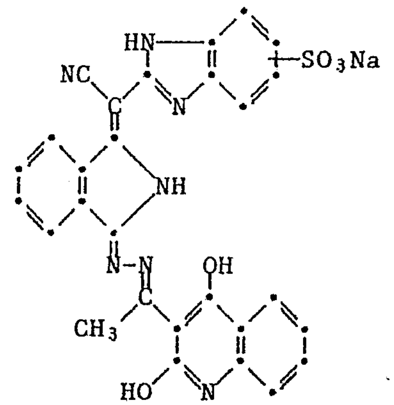 |
| 53 | 1:1-Ni | 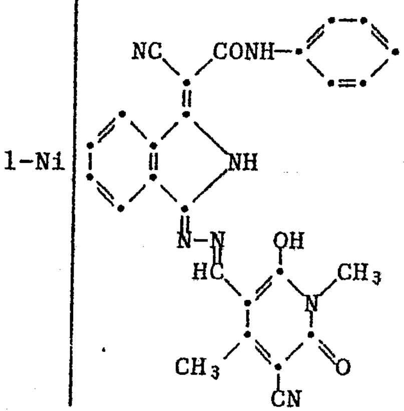 | 1:1-Ni | 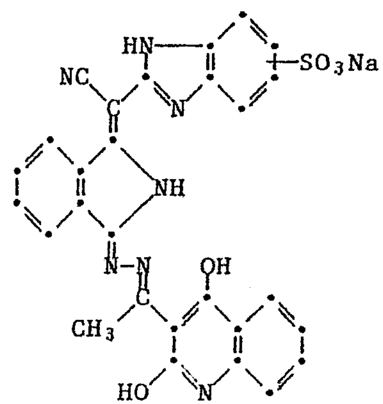 |

(*) Verhältnis Uebergangsmetall zu Ligand

Beispiel 54:

Zur Bestimmung des Fliessverhaltens wird das wie beschrieben behandelte Pigment nach üblicher Methode in ein Alkyd-Lacksystem (®Setal 84, Kunstharzfabriek Synthesis B.V., Holland; Festkörpergehalt: 70 Gew.%) eingearbeitet.

Das Fliessverhalten der Lackanreibung, welche 12 Gew.% Pigment und 54 Gew.% Gesamtfestkörper enthält und deren Pigment/Bindemittel-Verhältnis 0,3 beträgt, wird mit einem HAAKE-Viskosimeter ®Rotovisco RV 12 ermittelt (Messtemperatur: 25°C, Mess-System: SV-SP, Scherbereich; D = 0-100 [l/s]). Zur einfachen Charakterisierung der Fliesskurven können aus optimalen Regressionskurven ermittelte Viskositätswerte bei D = 10 [l/s] und 100 [l/s] angegeben werden.

Für die Lackanreibung mit den Pigmentgemischen gemäss den Beispielen 1, 2 und 17 werden deutlich verbesserte (niedrigere) Viskositätswerte gemessen als die Viskositätswerte, welche mit den entsprechenden Metallkomplexpigmenten ohne Komponente b) erhalten wurden.

Beispiel 53:

100 g einer 10%igen wässrigen Anschlämmung des 1:1-Cu-Komplexes aus dem Liganden der Formel

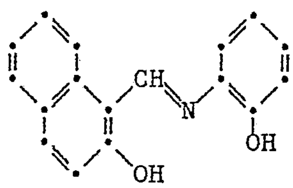

werden auf 70-75°C erwärmt, worauf eine Suspension von 0,6 g des Derivats der Formel

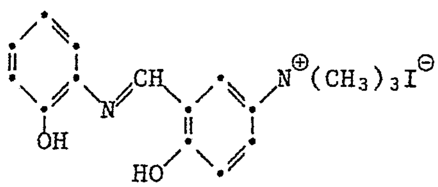

als 1:1-Cu-Komplex, und 50 ml Wasser zugegeben wird. Die erhaltene Mischung wird während 30 Minuten gerührt. Dann fügt man 5 ml einer 0,5 molaren $NaPF_6$-Lösung zu und rührt während weiterer 30 Minuten. Das erhaltene Produkt wird dann abfiltriert, mit Wasser gewaschen und bei 80-85°C im Vakuum getrocknet. Nach Siebung liegt ein Pigment vor, das Lackanreibungen mit günstigen rheologischen Eigenschaften liefert.

Das oben genannte Derivat kann z.B. durch Kondensation von 3-Formyl-4-hydroxyphenyl-trimethyl-ammonium-iodid mit 2-Aminophenol und anschliessende Komplexierung mit einem $Cu^{2+}$-Salz hergestellt werden.

Ebenfalls eine wertvolle Pigmentzusammensetzung erhält man bei gleicher Arbeitsweise durch Verwendung von 0,9 g des Derivates der oben genannten Formel als 1:1-Ni-Komplex (anstelle der 0,6 g des obigen 1:1-Cu-Komplexes).

Beispiel 56:

Der 1:2-Ni-Komplex aus dem Liganden der Formel

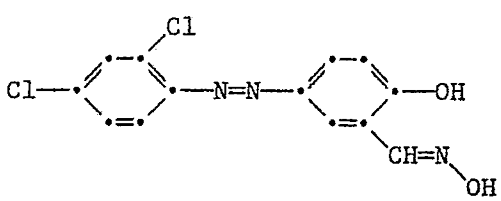

wird durch Glaskugelmahlung in eine feinteilige Form übergeführt. Die 10 g trockenen Pigments entsprechende Menge feuchtes Nutschgut wird in 100 ml Wasser angeschlämmt, die Suspension wird dann auf 70°C erwärmt und mit der Suspension von 1 g eines Produkts der Formel

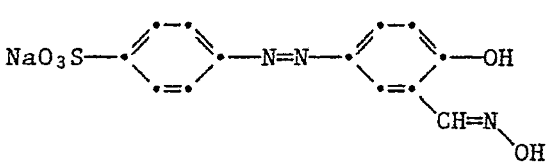 als 1:2-Ni-Komplex

in 50 ml Wasser versetzt. Die erhaltene Suspension wird während 30 Minuten bei 70°C gerührt, mit einer Lösung von 0,4 g Calciumchlorid in 20 ml Wasser versetzt und während weiterer 30 Minuten gerührt. Dann wird das erhaltene Produkt abfiltriert, mit Wasser gewaschen, getrocknet und gesiebt. Es liegt ein gelbes Produkt vor, das zu Lackansätzen mit günstigem Fliessverhalten führt.

Beispiel 57:

Ausgehend vom gleichen Basispigment wie in Beispiel 56 und einem Produkt der Formel

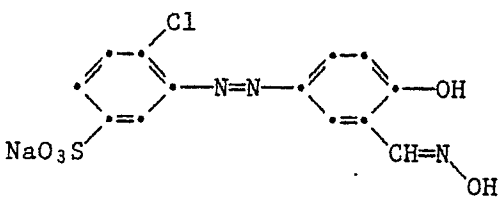

als 1:2-Ni-Komplex

erhält man bei analoger Arbeitsweise ebenfalls eine wertvolle Pigmentzusammensetzung.

Beispiel 58:

Der 1:2-Cu-Komplex mit dem Liganden der Formel

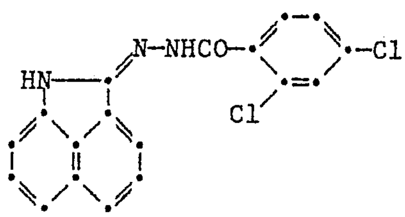

wird durch Salzknetung in Diacetonalkohol in eine feinteilige Form übergeführt. Der feuchte Presskuchen, entsprechend 10 g Trockenpigment, wird in Wasser angeschlämmt, und die erhaltene Suspension wird bei 70°C zuerst mit einer wässrigen Suspension von 1 g 1:2-Cu-Komplex aus dem Liganden der Formel

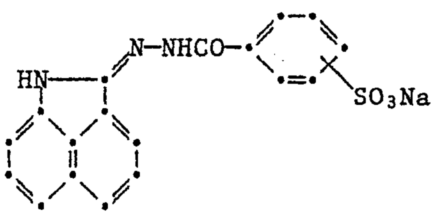

dann nach 20 Minuten Rühren mit 0,4 g $CaCl_2$ in 20 ml Wasser versetzt. Nach nochmaligem 30-minütigem Rühren wird das Produkt abfiltriert, mit Wasser gewaschen und im Vakuum bei 80-85°C getrocknet. Das gesiebte Produkt liefert Lackanreibungen mit günstigen Fliesseigenschaften und transparente, gelbe Lacke.

Der sulfonierte Ligand obiger Struktur kann z.B. aus dem literaturbekannten Sulfo-Benzhydrazidderivat durch Umsetzung mit Naphtholactam über das Anilderivat davon hergestellt werden.

Beispiel 59:

Ebenfalls eine wertvolle Pigmentzusammensetzung erhält man bei gleicher Arbeitsweise wie im Beispiel 58 ausgehend von einem 1:2-Nickelkomplex des Liganden der Formel

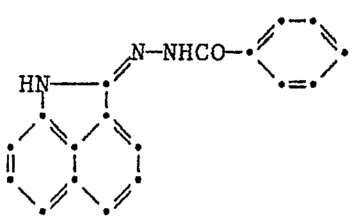

durch Behandeln mit dem 1:2-Nickelkomplex des Liganden der Formel

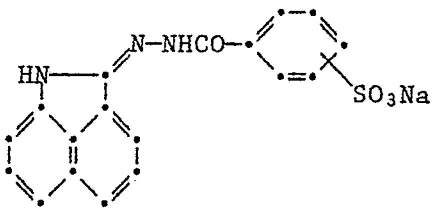

Beispiel 60:

Ebenfalls eine wertvolle Pigmentzusammensetzung erhält man bei gleicher Arbeitsweise wie im Beispiel 58 ausgehend von einem 1:2-Nickelkomplex des Liganden der Formel

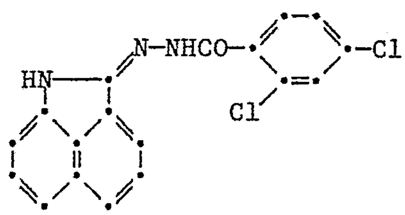

durch Behandeln mit dem 1:2-Nickelkomplex des Liganden der Formel

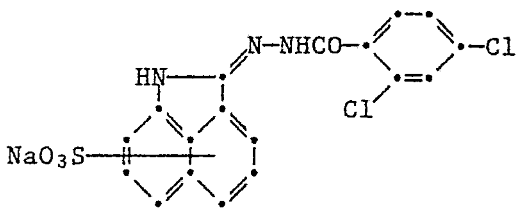

Beispiel 61:

Der 1:1-Kupferkomplex aus dem Liganden der Formel

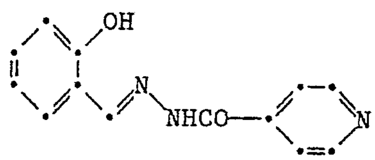

wird durch Glaskugelmahlung in eine feinteilige Form gebracht. Der feuchte Presskuchen, entsprechend 10 g Trockenpigment, wird in 100 ml Wasser angeschlämmt, und die erhaltene Suspension wird bei 70° C mit 1 g 1:1-Kupferkomplex mit dem Liganden der Formel

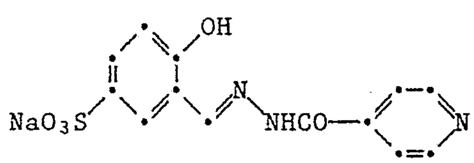

in 20 ml Wasser versetzt, dann während 30 Minuten bei 70° C gerührt, mit einer Lösung von 0,4 g $CaCl_2$ in 20 ml Wasser versetzt und weitere 30 Minuten gerührt. Dann wird das erhaltene Produkt abfiltriert, mit 100 ml Wasser gewaschen, im Vakuum bei 80-85° C getrocknet und gesiebt. Die so erhaltene grünstichig gelbe Pigmentzusammensetzung ergibt Lackansätze mit günstigem Fliessverhalten.

Beispiel 62:

Analog dem Beispiel 61 kann aus dem 1:1-Kupferkomplex aus dem Liganden der Formel

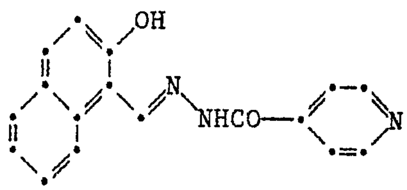

durch Behandlung mit dem 1:1-Nickelkomplex aus dem Liganden der Formel

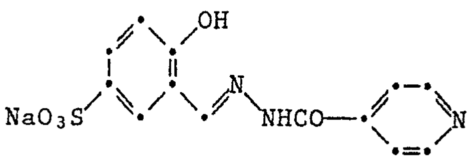

eine gelbe, wertvolle Pigmentzusammensetzung erhalten werden.

Beispiel 63:

Der 1:1-Nickelkomplex der Formel

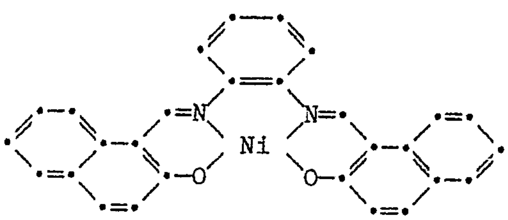

wird durch wässrige Mahlung in eine feinteilige Form übergeführt. Durch Behandeln analog dem Beispiel 61 mit dem Natriumsalz des 1:2-$Co^{3+}$-Komplexes aus dem Liganden der Formel

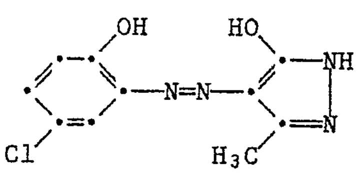

erhält man ein oranges Produkt, dessen Lackanreibungen sich durch ein vorteilhaftes Fliessverhalten auszeichnen.

Beispiel 64:

Ein ebenfalls wertvolles Produkt erhält man, wenn man das Basispigment gemäss Beispiel 63 mit dem Na-Salz des 1:2-$Co^{3+}$-Komplexes aus dem Liganden der Formel

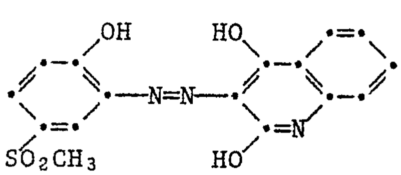

behandelt.

Beispiel 65:

Der 1:1-Ni-Komplex aus dem Liganden der Formel

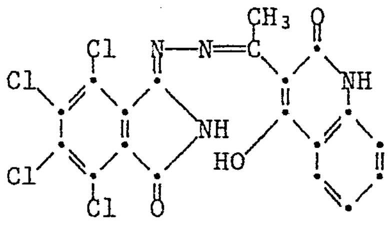

wird durch Salzknetung in Diacetonalkohol nach bekannten Verfahren in eine feinteilige Form übergeführt. Die 10 g trockenen Pigments entsprechende Menge feuchtes Pressgut wird in Wasser suspendiert, bei 70°C mit der wässrigen Anschlämmung von 1 g 1:2-$Co^{2+}$-Komplex aus dem Liganden der Formel

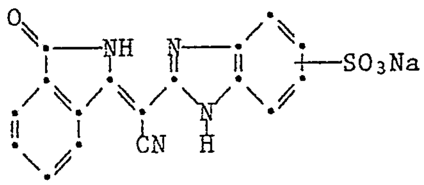

versetzt, und die erhaltene Suspension wird nach 30-minütigem Rühren mit 0,4 g Calciumchlorid in 20 ml Wasser versetzt und weitere 30 Minuten bei 70°C gerührt. Dann wird das Produkt durch Filtration, Waschen mit Wasser und Trocknen im Vakuum bei 80-85°C isoliert. Das gesiebte Produkt liefert Lackanreibungen mit günstigen Fliesseigenschaften und transparente, rotstichig gelbe Lackausfärbungen.

Beispiel 66:

Arbeitet man wie in Beispiel 65 beschrieben, setzt aber anstelle des Co-Komplexes den 1:2-$Cr^{3+}$-Komplex aus dem Liganden folgender Formel

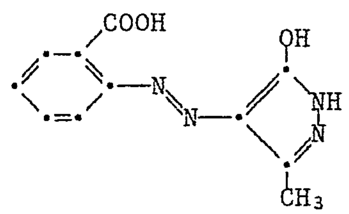

in Form seines Natriumsalzes ein, so erhält man ebenfalls eine wertvolle Pigmentzusammensetzung für goldgelbe Lackausfärbungen.

Beispiel 67-71:

10 g irgendeines feinteiligen Metallkomplexpigments gemäss Tabelle 6 werden in wässriger Suspension mit der entsprechenden Komponente b und anschliessend mit einer $CaCl_2$-Lösung behandelt. Die so modifizierten Pigmente liefern Lackanreibungen mit günstigem Fliessverhalten.

Tabelle 6

| Beispiel Nr. | Metallkomplexpigment | | Komponente b | |
|---|---|---|---|---|
| | Komplex (*) | Ligand | Komplex (*) | Ligand |
| 67 | 1:2-Ni | 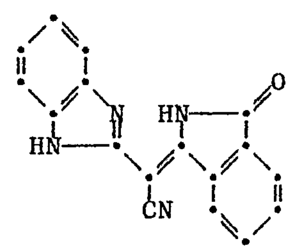 | 1:2-Ni | 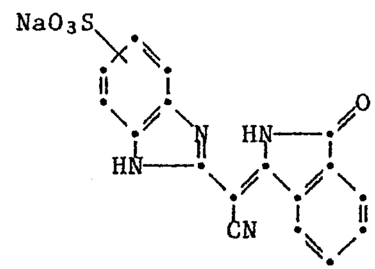 |
| 68 | 1:2-Co | 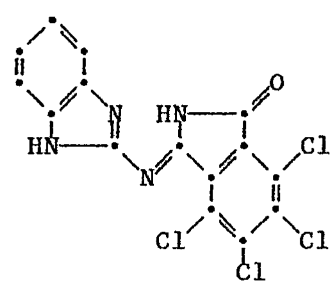 | 1:2-Co | 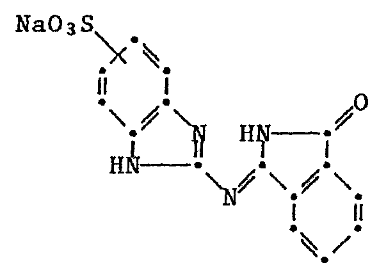 |
| 69 | 1:2-Co | 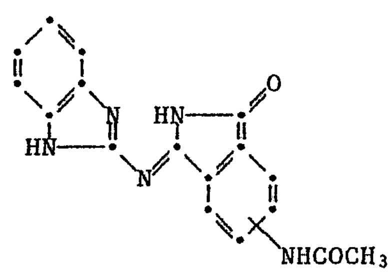 | 1:2-Co | 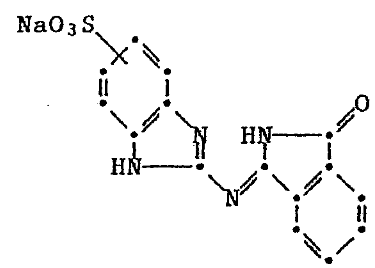 |

Tabelle 6 (Fortsetzung)

| Beispiel Nr. | Metallkomplexpigment | | Komponente b | |
|---|---|---|---|---|
| | Komplex (*) | Ligand | Komplex (*) | Ligand |
| 70 | 1:2-Co | 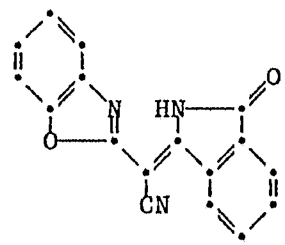 | 1:2-Co | 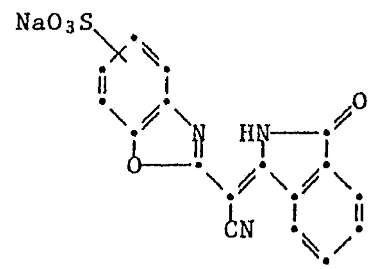 |
| 71 | 1:2-Co | 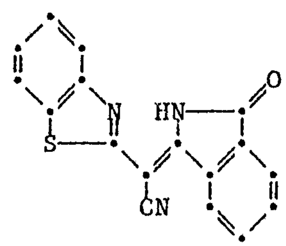 | 1:2-Co | 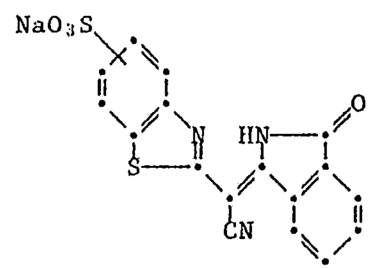 |

(*) Verhältnis Uebergangsmetall zu Ligand

Beispiel 72:

10 g eines durch Glaskugelmahlung zerkleinerten Musters des Pigmentes der Formel

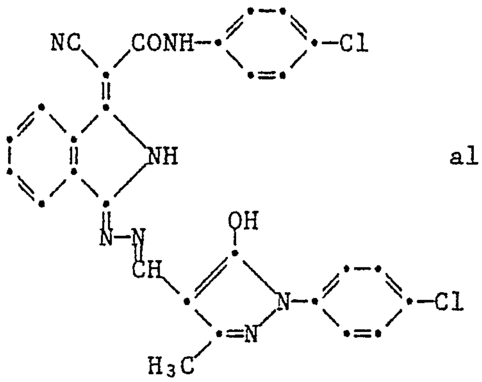

als 1:1-Ni-Komplex

werden in Form einer wässrigen Anschlämmung zuerst mit 1 g des Derivates der Formel

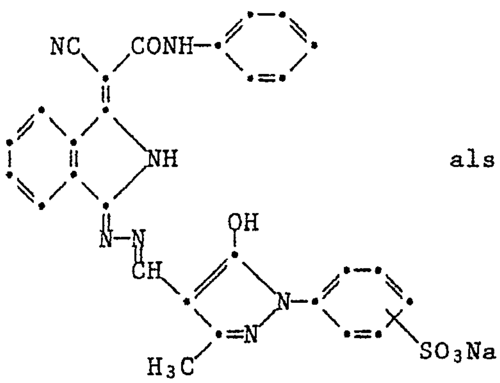

als 1:1-Ni-Komplex

und anschliessend mit 0,4 g Calciumchlorid behandelt. Das isolierte und getrocknete Produkt zeichnet sich durch gute Fliessfähigkeit seiner Lackanreibungen aus.

Das oben genannte Derivat kann z.B. durch Kondensation des Hydrazons der Formel

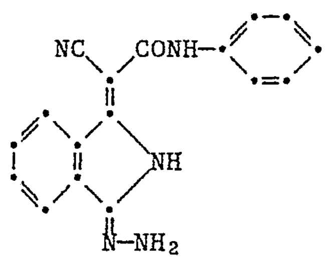

mit der Anil der Formel

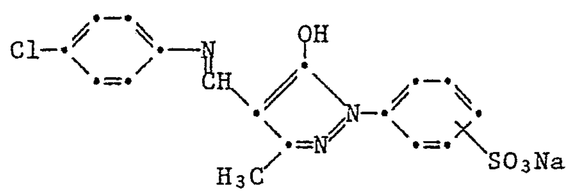

in Dimethylacetamid und anschliessende Metallisierung mit Ni-Acetat nach bekannten Verfahren hergestellt werden.

Beispiel 73-84:

Ebenfalls wertvolle Pigmentzusammensetzungen erhält man bei gleicher Arbeitsweise wie im Beispiel 72, ausgehend von einem der in Tabelle 7 aufgeführten Metallkomplexpigmente und dem entsprechenden Derivat (Komponente b).

Tabelle 7

| Beispiel Nr. | Metallkomplexpigmente | | Komponente b | |
|---|---|---|---|---|
| | Komplex (*) | Ligand | Komplex (*) | Ligand |
| 73 | 1:1-Ni | 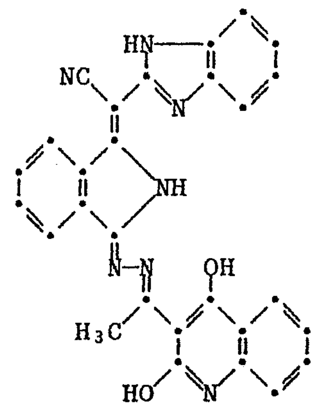 | 1:1-Ni | 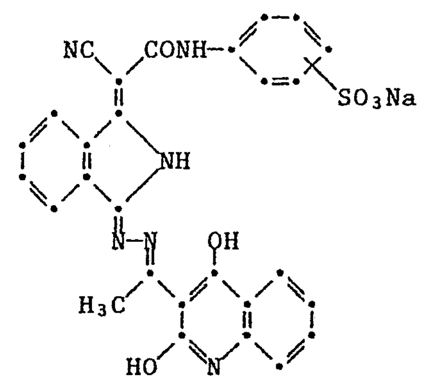 |
| 74 | 1:1-Ni | 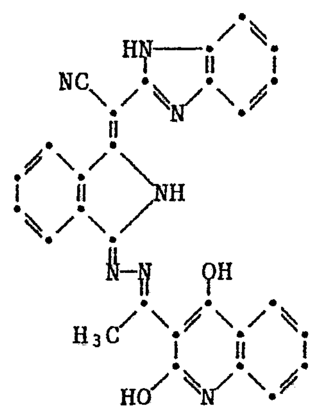 | 1:1-Ni | 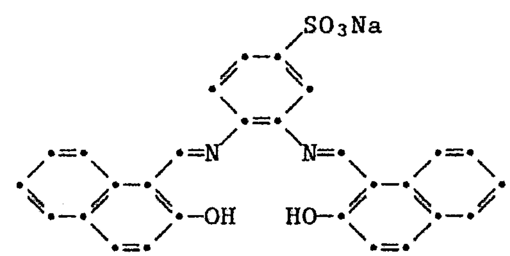 |

Tabelle 7 (Fortsetzung)

| Beispiel Nr. | Metallkomplexpigmente Komplex (*) | Metallkomplexpigmente Ligand | Komponente b Komplex (*) | Komponente b Ligand |
|---|---|---|---|---|
| 75 | 1:1-Ni | 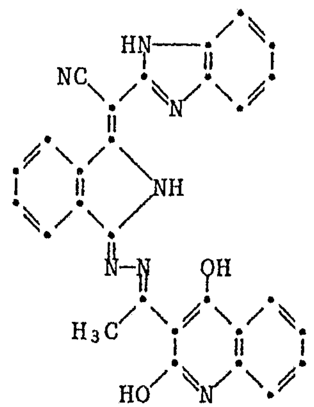 | 1:2-$Co^{3+}$, Na-Salz | 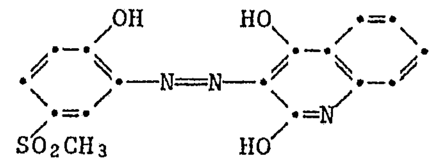 |
| 76 | 1:1-Ni | 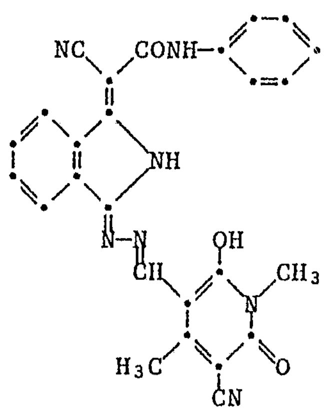 | 1:1-Ni | 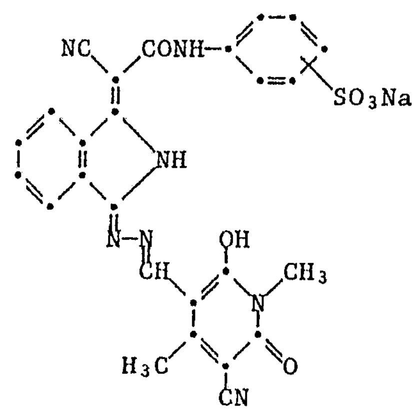 |

Tabelle 7 (Fortsetzung)

| Beispiel Nr. | Metallkomplexpigmente | | Komponente b | |
|---|---|---|---|---|
| | Komplex (*) | Ligand | Komplex (*) | Ligand |
| 77 | 1:1-Ni | 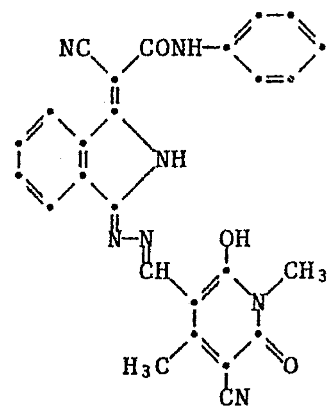 | 1:1-Ni | 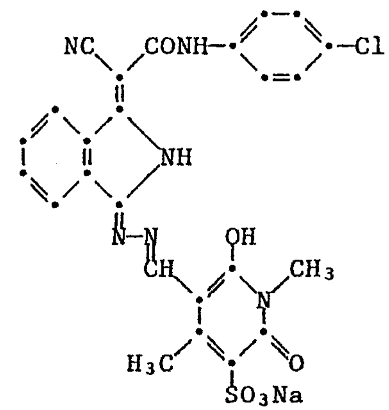 |
| 78 | 1:1-Ni | 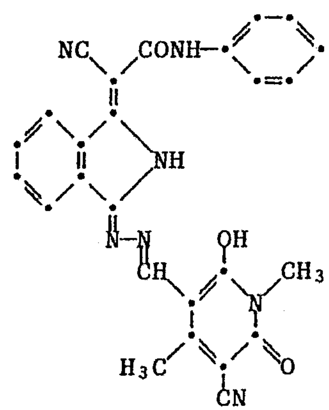 | 1:1-Ni | 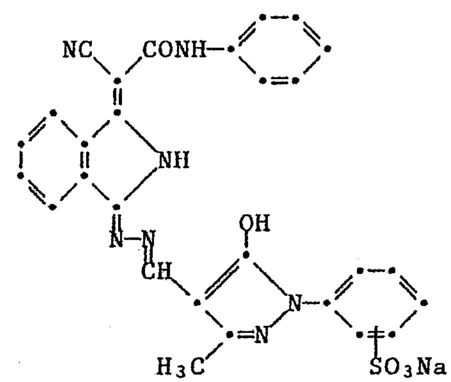 |

Tabelle 7 (Fortsetzung)

| Beispiel Nr. | Metallkomplexpigmente | | Komponente b | |
|---|---|---|---|---|
| | Komplex (*) | Ligand | Komplex (*) | Ligand |
| 79 | 1:1-Cu | 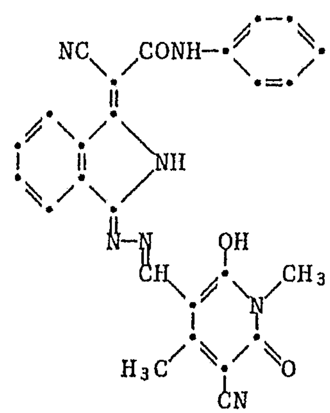 | 1:1-Cu | 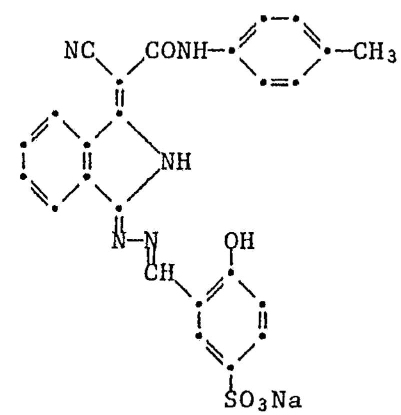 |
| 80 | 1:1-Ni | 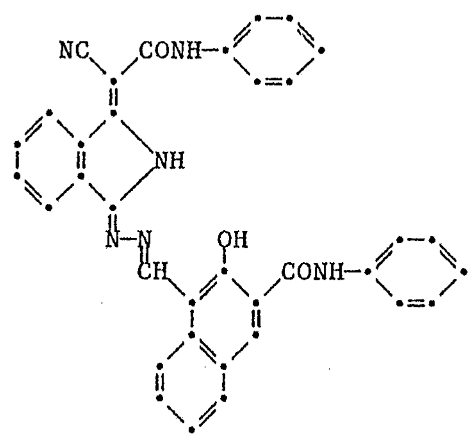 | 1:1-Ni | 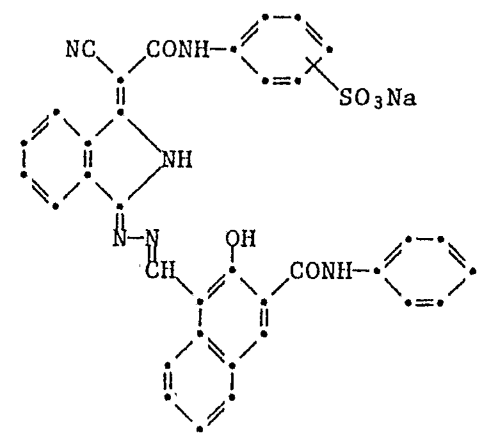 |

Tabelle 7 (Fortsetzung)

| Beispiel Nr. | Metallkomplexpigmente | | Komponente b | |
|---|---|---|---|---|
| | Komplex (*) | Ligand | Komplex (*) | Ligand |
| 81 | 1:1-Ni | 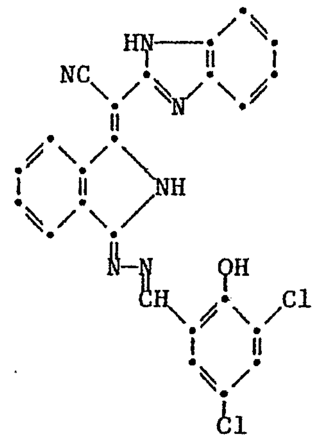 | 1:1-Ni | 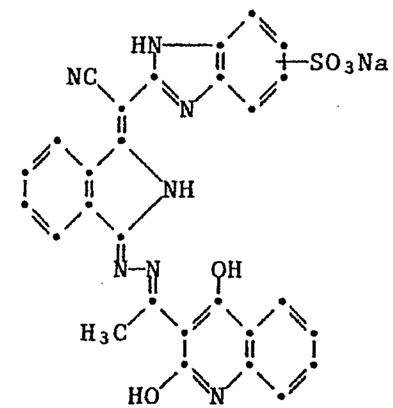 |
| 82 | 1:1-Ni | 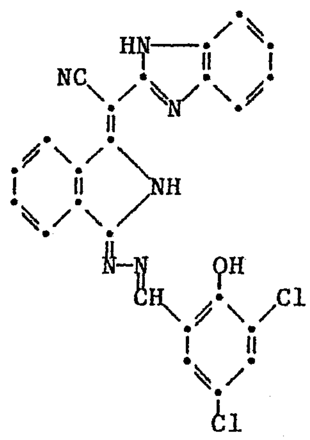 | 1:1-Ni | 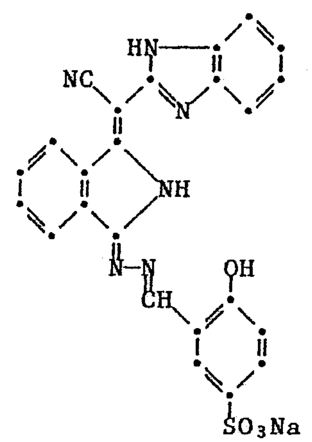 |

Tabelle 7 (Fortsetzung)

| Beispiel Nr. | Metallkomplexpigmente | | Komponente b | |
|---|---|---|---|---|
| | Komplex (*) | Ligand | Komplex (*) | Ligand |
| 83 | 1:1-Ni | 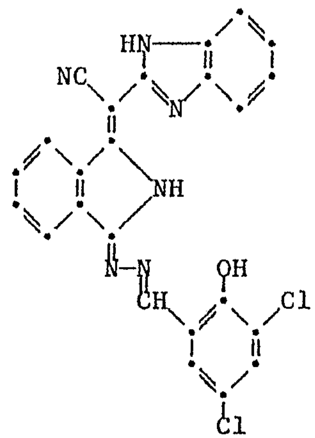 | 1:2-$Cr^{3+}$, Na-Salz | 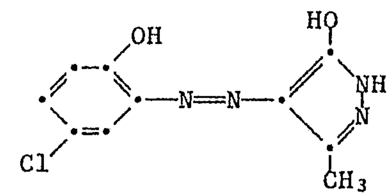 |
| 84 | 1:1-Ni | 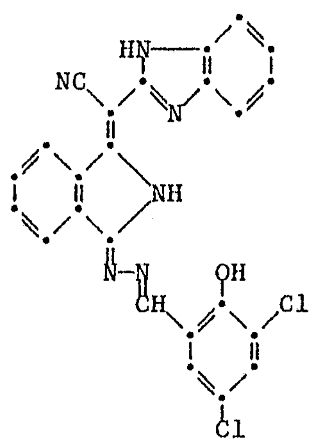 | 1:2-$Cr^{3+}$, Na-Salz | 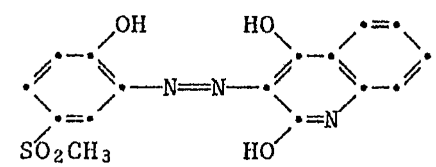 |

(*) Verhältnis Uebergangsmetall zu Ligand

Das im Beispiel 73 verwendete Derivat (Komponente b) kann z.B. durch Sulfonierung des Isoindolinons der Formel

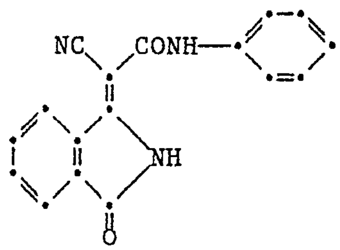

und anschliessende Kondensation mit dem Hydrazon der Formel

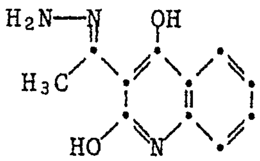

in Gegenwart von Nickelacetat nach bekannten Verfahren hergestellt werden.

Beispiel 85:

10 g wässrig gemahlenes Pigment der Formel

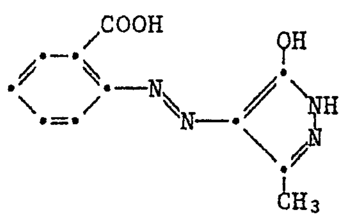

als 1:1-Ni-Komplex werden in Wasser angeschlämmt, dann mit der wässrigen Lösung von 1 g des Produktes der Formel

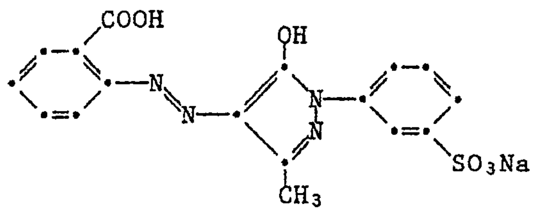

als 1:1-Ni-Komplex versetzt, und das erhaltene Produkt wird mit der Lösung von 0,4 g Calciumchlorid behandelt. Die isolierte und getrocknete Pigmentzusammensetzung liefert gelbe Lackanreibungen mit vorteilhaften rheologischen Eigenschaften.

Beispiel 86:

Aus 10 g des Metallkomplexpigments der Formel

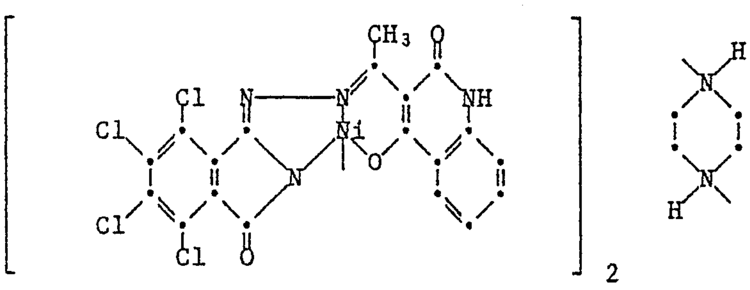

und 1 g des Derivats der Formel

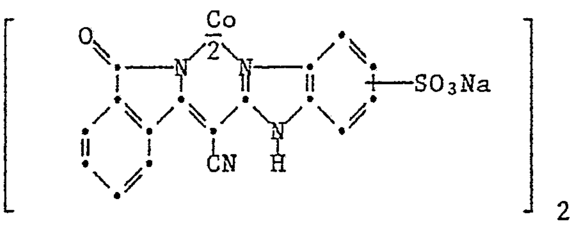

erhält man bei gleicher Arbeitsweise wie in Beispiel 85 ebenfalls eine wertvolle gelbe Pigmentzusammensetzung.

## Patentansprüche

1. Stoffzusammensetzung enthaltend a) ein gelbes, oranges, rotes, braunes oder violettes Metallkomplexpigment und b) ein anionisches oder kationisches Derivat eines solchen Metallkomplexpigmentes, wobei das Mengenverhältnis der Komponente a) zur Komponente b) 99 bis 80 Gew.% zu 1 bis 20 Gew.% beträgt.

2. Stoffzusammensetzung gemäss Anspruch 1, dadurch gekennzeichnet, dass das Metallkomplexpigment ein Azo-, Axomethin-, Oxim-, Aroylhydrazon-, Isoindolin- oder Isoindolinonderivat ist.

3. Stoffzusammensetzung gemäss Anspruch 1, dadurch gekennzeichnet, dass das anionische Derivat ein anionisches Sulfonsäurederivat ist, das mindestens eine Gruppe der Formel $-SO_3^{\ominus}X^{\oplus}$ aufweist, wobei $X^{\oplus}$eine Gruppe der Formeln $\frac{M^{n\oplus}}{n}$ oder $N^{\oplus}(R_1)(R_2)(R_3)(R_4)$ darstellt, wobei $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, Benzyl, unsubstituiertes oder durch $C_1$-$C_{18}$-Alkyl substituiertes Phenyl bedeuten, oder $R_3$ und $R_4$ zusammen mit dem N-Atom einen Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chinolin- oder Isochinolin-rest bilden.

4. Stoffzusammensetzung gemäss Anspruch 3, dadurch gekennzeichnet, das $X^{\oplus}$ eine Gruppe der Formel $\frac{M^{n\oplus}}{n}$ ist, wobei M und n die in Anspruch 3 angegebene Bedeutung haben.

5. Stoffzusammensetzung gemäss Anspruch 1 enthaltend a) ein Metallkomplexpigment der Formeln I bis X

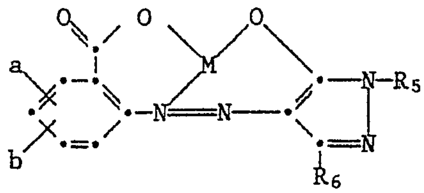

(I)

,

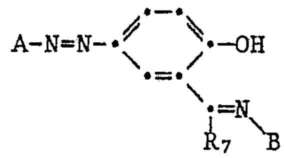

als 1:1- oder 1:2-M-Komplex ,

(II)

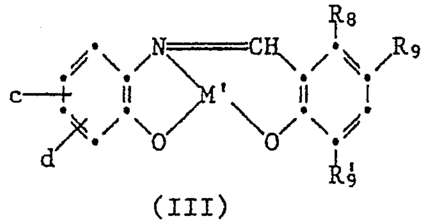

(III)

,

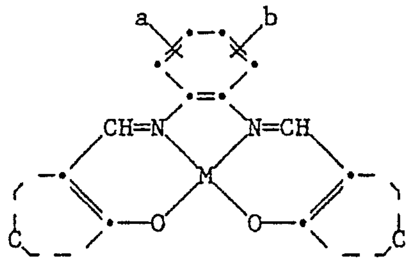

(IV)

,

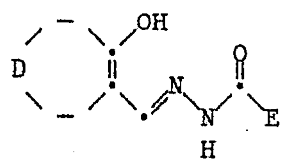

(V)

als 1:1- oder 1:2-M-Komplex,

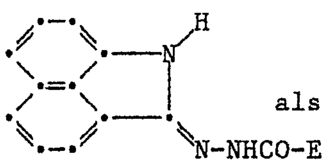

(VI)

als 1:2-M-Komplex,

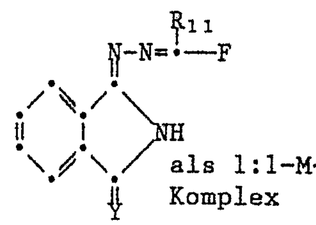

(VII)

als 1:1-M-Komplex ,

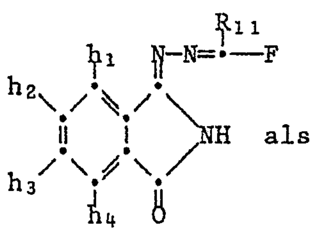

(VIII)

als 1:1-M-Komplex,

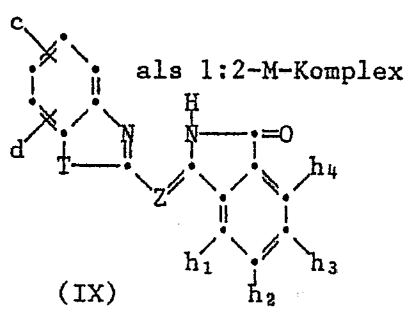

(IX)

als 1:2-M-Komplex

,

oder

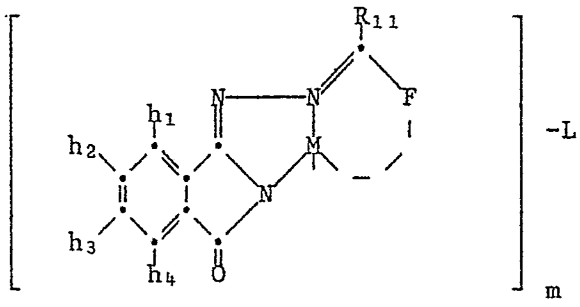

(X)

und

b) mindestens ein anionisches Derivat eines Metallkomplexes der Formeln I bis X, enthaltend mindestens eine Gruppe der Formel $-SO_3^{\ominus}\ \frac{X^{2\oplus}}{2}$ , wobei die Komponenten a) und b) in der Zusammensetzung den gleichen oder einen verschiedenen Strukturtypus gemäss Formeln I bis X aufweisen, und $X^{2\oplus}$ ein Erdalkalimetallkation darstellt, wobei in den Formeln I, II und IV bis X M ein zweiwertiges Ni-, Cu-, Co- oder Zn-Kation ist, und in der Formel III M' Cu oder Ni ist, in der Formel I

$R_5$ -H, unsubstituiertes Phenyl oder Phenyl, das durch 1 bis 2 gleiche oder verschiedene Substituenten aus der Gruppe bestehend aus Chloratomen, Methyl- und Methoxygruppen substituiert sein kann, und $R_6$ $-CH_3$, $-COOCH_3$, $-COOC_2H_5$ oder $-CONH_2$ bedeuten und a und b unabhängig voneinander -H, -Cl, $-CH_3$, $-NO_2$, $-NHCOCH_3$ oder $-SO_2NH_2$ sind, in der Formel II

A unsubstituiertes Phenyl oder Phenyl, das durch 1 bis 3 gleiche oder verschiedene Substituenten aus der Gruppe bestehend aus Chlor- und Bromatomen oder Methyl- und Methoxygruppen, ferner durch $-NO_2$, $-CF_3$, -CN, $-CONH_2$, $-CONHC_1$-$C_3$-Alkyl, $-NHCOC_1$-$C_3$-Alkyl, $-NHCOC_6H_5$, $SO_2NH_2$, -CO-$OC_1$-$C_3$-Alkyl substituiert sein kann, und $R_7$ -H oder $-CH_3$ und B -H, -OH, $-NHCONHR_5$, $-NHCSNH_2$, $-NHC(NH)NH_2$, $-NHR_5$ oder $-NHCOR_5$ darstellen, wobei $R_5$ die oben für die Formel I angegebene Bedeutung hat,

in der Formel III

$R_8$ -H, und $R_9$ und $R_9'$ unabhängig voneinander -H, -Cl, $-CH_3$ oder $-OCH_3$ bedeuten oder $R_8$ und $R_9$ zusammen mit dem benachbarten Kohlenstoffatom, an das sie gebunden sind, einen Benzolring darstellen, und c und d unabhängig voneinander -H, -Cl, $-CH_3$, $-OCH_3$, $-COOCH_3$, $-COOC_2H_5$, $-CONH_2$, $-SO_2NH_2$ oder $-NHCOCH_3$ bedeuten,

in der Formel IV

a und b die oben für die Formel I angegebene Bedeutung haben, C zusammen mit den zwei benachbarten Kohlenstoffatomen, an die C gebunden ist, einen Benzol- oder Naphthalin-1,2-rest oder einen Rest der Formeln

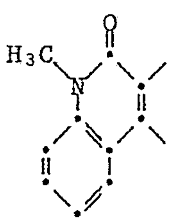 , 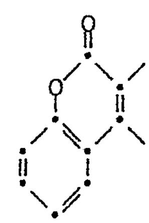 oder 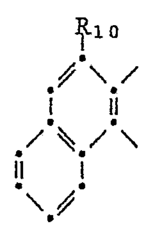

darstellt, wobei $R_{10}$ -H, -COOH oder einen N-Phenylcarbamidorest bedeutet, wobei der Phenylrest durch 1 bis drei gleiche oder verschiedene Substituenten aus der Gruppe bestehend aus Chloratomen, Methyl- oder Methoxygruppen, ferner durch $-NO_2$, $-NHCOC_1$-$C_3$-Alkyl oder $-NHCOC_6H_5$ substituiert sein kann,

in der Formel V

D zusammen mit den zwei benachbarten Kohlenstoffatomen, and die D gebunden ist, einen unsubstituierten oder durch -Cl oder -Br substituierten Benzol- oder Naphthalin-1,2-rest oder einen Rest der Formeln

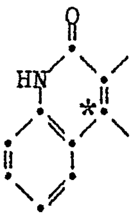 , 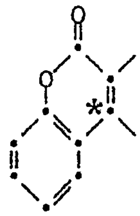 oder 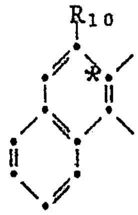

darstellt, wobei die HO-Gruppe gemäss Formel V an das mit einem Stern bezeichnete Kohlenstoffatom gebunden ist, und
$R_{10}$ die oben für die Formel IV angegebene Bedeutung hat, und E unsubstituiertes oder durch 1 bis 2 gleiche oder verschiedene Substituenten aus der Gruppe bestehend aus $-CH_3$, $-OCH_3$, -Cl, -Br oder $-NO_2$ substituiertes Phenyl ist,
in der Formel VI
E die oben für die Formel V angegebene Definition hat,
in der Formel VII
$R_{11}$ -H oder $-CH_3$ ist, F für einen Rest der Formeln

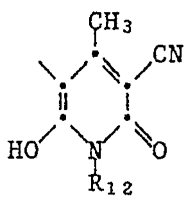 , 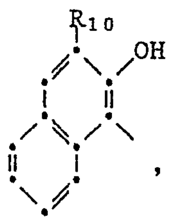 , 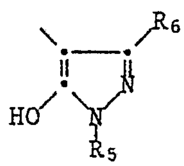 , 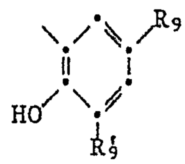 ,

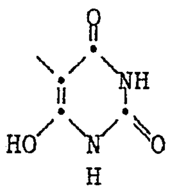 , 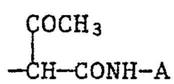 , 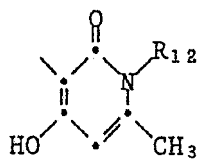 ,

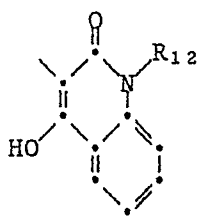 oder 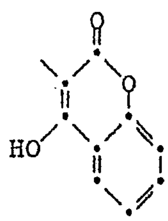 steht, oder

F und $R_{11}$ zusammen mit dem benachbarten Kohlenstoffatom, an das sie gebunden sind, einen Rest der Formel

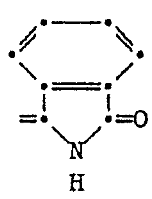

bilden, wobei $R_{12}$ -H oder $C_1$-$C_3$-Alkyl bedeutet und $R_5$, $R_6$, $R_9$, $R_9'$ und $R_{10}$ die oben für die Formeln I, III und IV angegebene Bedeutung haben, und Y für einen Rest der Formeln

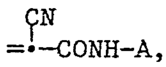 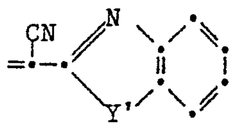 oder 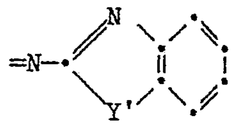 steht ,

A die oben für die Formel II angegebene Bedeutung hat, und Y' -NH-, -O-oder -S- bedeutet,
in der Formel VIII
F und $R_{11}$ die oben für die Formel VII angegebene Bedeutung haben, $h_1$ bis $h_4$ -H oder -Cl, oder $h_1$ und/oder $h_3$ $-OCH_3$ und die restlichen h -Cl bedeuten,
in der Formel IX
T -NH- , -O- oder -S- bedeutet,
Z für den Rest =N- oder = 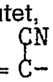 steht, und c und d sowie $h_1$ bis $h_4$ die oben für die Formel III bzw. Formel VIII angegebene Bedeutung haben, und
in der Formel X
F, $R_{11}$ sowie $h_1$ bis $h_4$ die oben für die Formeln VII und VIII angegebene Bedeutung haben, wobei der Rest F über ein α-ständiges Sauerstoffatom an M gebunden ist, L $-NH_3$ und m die Zahl 1, oder L $-NH_2CH_2CH_2NH_2-$ oder Piperazin und m die Zahl 2 bedeuten.

6. Stoffzusammensetzung gemäss Anspruch 5, dadurch gekenneichnet, dass die Komponenten a) und b) in der Zusammensetzung den gleichen Strukturtypus gemäss Formeln I bis X aufweisen.

7. Stoffzusammensetzung gemäss Anspruch 5, dadurch gekennzeichnet, dass X in der Gruppe der Formel $-SO_3^{\ominus}\ \frac{X^{2\oplus}}{2}$ Ca bedeutet.

8. Stoffzusammensetzung gemäss Anspruch 5, dadurch gekennzeichnet, dass das Metallkomplexpigment in den Formeln I, II, IV bis VIII und X ein Nickel- oder Kupfer-Komplex, in der Formel III ein Kupfer-Komplex und in der Formel IX ein Cobalt-II-Komplex ist.

9. Stoffzusammensetzung gemäss Anspruch 5, dadurch gekennzeichnet, dass die Komponente a) ein Metallkomplexpigment der Formeln III, IV oder IX ist, wobei in der Formel III M' Kupfer und die Substituenten c und d sowie $R_9'$ -H sind und $R_8$ und $R_9$ zusammen mit dem benachbarten Kohlenstoffatom, an das sie gebunden sind, einen Benzolring bilden, in der Formel IV M Nickel ist, a und b -H bedeuten, C zusammen mit den zwei benachbarten Kohlenstoffatomen, an die C gebunden ist, eine Gruppe der Formel

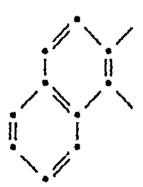

bildet und in der Formel IX T -NH- , M Co, c und d sowie $h_1$ bis $h_4$ -H und
Z -N= oder NC-C bedeuten.

10. Stoffzusammensetzung gemäss Anspruch 5, dadurch gekennzeichnet, dass die Komponente a) eine Verbindung der Formel III und die Komponente b) ein anionisches Derivat eines Metallkomplexes der Formel III enthaltend eine Gruppe der Formel $-SO_3^{\ominus}\ \frac{X^{2\oplus}}{2}$ sind, wobei in der Formel III für beide Komponenten a) und b) M' Kupfer und die Substituenten c und d sowie $R_9'$ -H sind und $R_8$ und $R_9$ zusammen mit den benachbarten Kohlenstoffatomen, an die sie gebunden sind, einen Benzolring bilden, und für die Komponente b) X ein Erdalkalimetallkation darstellt.

11. Metallkomplexe der Formeln XI, XII und XIII

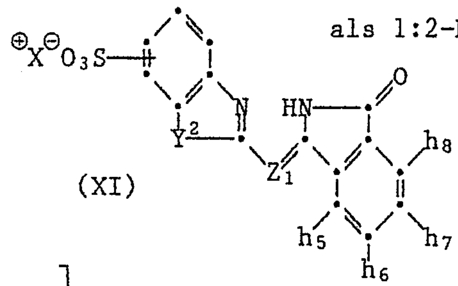

als 1:2-M-Komplex,

(XI)

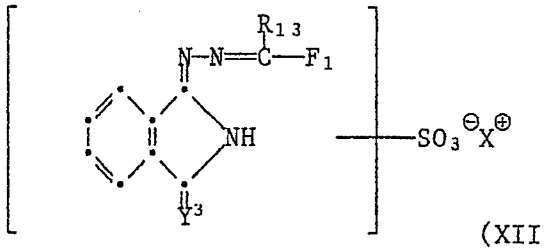

als 1:1-M-Komplex,

(XII)

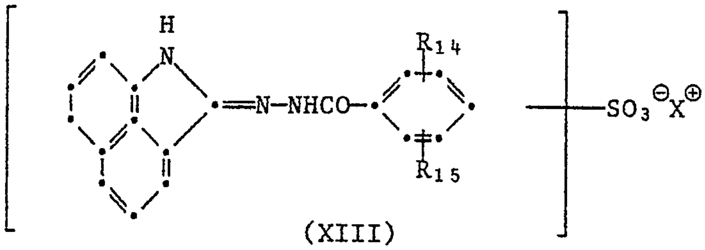

als 1:1-M-Komplex,

(XIII)

worin
in der Formel XI
$h_5$, $h_6$, $h_7$ und $h_8$ -H oder -Cl, oder $h_5$ und/oder $h_8$ $-OCH_3$ und die restlichen h -Cl, M Co, Ni, Cu oder Zn, $Y^2$ -NH-, -O-oder -S-, $Z_1$ den Rest =N- oder

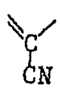

, und X eine Gruppe der Formeln $\frac{M^{n\oplus}}{n}$ oder $N^{\oplus}(R_1)(R_2)(R_3)(R_4)$ bedeuten, wobei $M^{n\oplus}$ ein n-wertiges Metallkation, n die Zahlen 1, 2 oder 3, $R_1$, $R_2$, $R_3$, $R_4$ unabhängig voneinander Wasserstoff, $C_1$-$C_{18}$-Alkyl, $C_5$-$C_6$-Cycloalkyl, Benzyl, unsubstituiertes oder durch $C_1$-$C_{18}$-Alkyl substituiertes Phenyl bedeuten, oder $R_3$ und $R_4$ zusammen mit dem N-Atom einen Pyrrolidin-, Imidazolidin-, Piperidin-, Piperazin- oder Morpholinrest, oder $R_2$, $R_3$ und $R_4$ zusammen mit dem N-Atom einen Pyrrol-, Pyridin-, Picolin-, Pyrazin-, Chinolin- oder Isochinolinrest bilden,
in der Formel XII
M Ni oder Cu, und $R_{13}$ -H oder $C_1$-$C_3$-Alkyl bedeuten, oder $R_{13}$ und $F_1$ zusammen mit dem benachbarten Kohlenstoffatom, an das sie gebunden sind, einen Rest der Formel

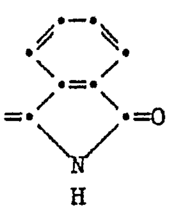

bilden, ferner $F_1$ einen Rest der Formeln

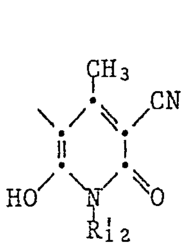, 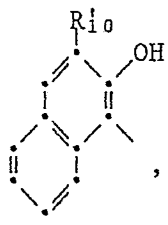, 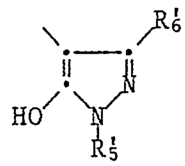, 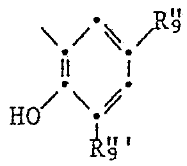,

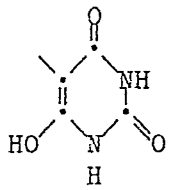, 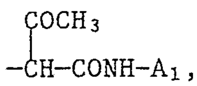, 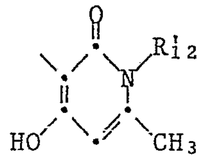,

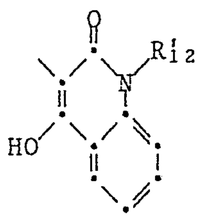 oder 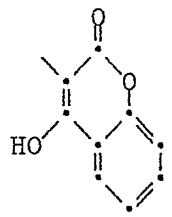 darstellt, wobei

$R'_5$ -H, unsubstituiertes Phenyl oder Phenyl ist, das durch 1 bis 2 gleiche oder verschiedene Substituenten aus der Gruppe bestehend aus Chloratomen, Methyl- und Methoxygruppen substituiert sein kann, $R'_6$ $-CH_3$, $-COOCH_3$, $-COOC_2H_5$ oder $-CONH_2$ und $R''_9$ und $R''_9{}'$ unabhängig voneinander -H, -Cl, $-CH_3$ oder $-OCH_3$ bedeuten, ferner $R'_{10}$ -H, -COOH oder einen N-Phenylcarbamidorest bedeutet, wobei der Phenylrest durch eins bis drei gleiche oder verschiedene Substituenten aus der Gruppe bestehend aus Chloratomen, Methyl- oder Methoxygruppen, ferner durch $-NO_2$, -NHCO-$C_1$-$C_3$-Alkyl oder $-NHCOC_6H_5$ substituiert sein kann, $R'_{12}$ -H oder $C_1$-$C_3$-Alkyl bedeutet,
$A_1$ unsubstituiertes Phenyl oder Phenyl bedeutet, das durch 1 bis 3 gleiche oder verschiedene Substituenten aus der Gruppe bestehend aus Chlor- und Bromatomen oder Methyl- und Methoxygruppen, ferner durch $-NO_2$, $-CF_3$, -CN, $-CONH_2$, -CONHC$_1$-$C_3$-Alkyl, -NHCOC$_1$-$C_3$-Alkyl, $-NHCOC_6H_5$ $-SO_2$-$NH_2$, -COOC$_1$-$C_3$-Alkyl substituiert sein kann, und
$Y^3$ für einen Rest der Formeln

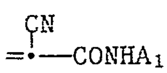, 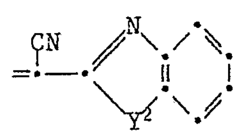 oder 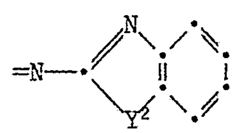

steht, und $A_1$ die oben angegebene Bedeutung hat, $Y^2$ -NH-, -O- oder -S- darstellt, und $X^\oplus$ die oben für die Formel XI angegebene Bedeutung hat, und
in der Formel XIII
M Cu oder Ni, $R_{14}$ und $R_{15}$ unabhängig voneinander -H, $-CH_3$, $-OCH_3$, -Cl und -Br bedeuten, und X die oben für die Formel XI angegebene Bedeutung hat.

12. Metallkomplexe der Formeln XI und XII gemäss Anspruch 11, worin in der Formel XI M Co, $Y^2$ -NH-, $Z_1$ =N- oder 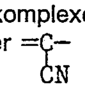, $h_5$, $h_6$, $h_7$ und $h_8$ -H und X eine Gruppe der Formel $\frac{M^{n\oplus}}{n}$ bedeuten, wobei $M^{n\oplus}$ ein Erdalkalimetallkation bedeutet, und in der Formel XII
M Ni oder Cu ist, $F_1$ und $R_{13}$ die im Anspruch 11 angegebene Bedeutung haben, und $Y^3$ einen Rest der Formeln

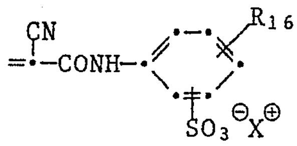

oder

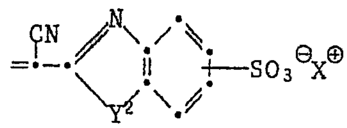

darstellt, wobei $R_{16}$ -H , $-CH_3$ oder $-OCH_3$ , und $Y^2$ -O- , -S- oder -NH- bedeuten, und X die oben im Anspruch 12 angegebene Bedeutung hat.

13. Metallkomplexe der Formeln XI, XII und XIII gemäss Anspruch 11, worin X eine Gruppe der Formel $\frac{M^{n\oplus}}{n}$ bedeutet, wobei $M^{n\oplus}$ $Ca^{2\oplus}$ darstellt.

14. Verfahren zum Färben von hochmolekularem organischem Material, dadurch gekennzeichnet, dass eine Stoffzusammensetzung gemäss Anspruch 1 verwendet wird.

15. Hochmolekulares organisches Material enthaltend eine Stoffzusammensetzung gemäss Anspruch 1.